(19) Europäisches Patentamt / European Patent Office / Office européen des brevets

(11) **EP 3 922 811 B1**

(12) **EUROPEAN PATENT SPECIFICATION**

(45) Date of publication and mention
of the grant of the patent:
**15.01.2025 Bulletin 2025/03**

(51) International Patent Classification (IPC):
**E21B 43/27** (2006.01)    **E21B 43/25** (2006.01)
**E21B 43/28** (2006.01)

(21) Application number: **20179814.7**

(22) Date of filing: **12.06.2020**

(52) Cooperative Patent Classification (CPC):
**E21B 43/27; E21B 43/25; E21B 43/28;**
E21B 2200/20

(54) **A METHOD FOR MATRIX-ACID STIMULATION DESIGN IN LIMITED ENTRY LINERS**

VERFAHREN ZUM MATRIX-SÄURESTIMULATIONSENTWURF IN LINERN MIT BEGRENZTEM ZUGANG

PROCÉDÉ DE CONCEPTION DE STIMULATION D'ACIDE DE MATRICE DANS DES REVÊTEMENTS À ACCÈS LIMITÉ

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**15.12.2021 Bulletin 2021/50**

(73) Proprietor: **Abu Dhabi National Oil Company Abu Dhabi (AE)**

(72) Inventor: **MOGENSEN, Kristian Abu Dhabi (AE)**

(74) Representative: **Bardehle Pagenberg Partnerschaft mbB Patentanwälte Rechtsanwälte Prinzregentenplatz 7 81675 München (DE)**

(56) References cited:
**US-A1- 2009 294 122     US-A1- 2016 245 049**

**Description**

FIELD OF THE INVENTION

The invention relates to fluid transport in a system for stimulating a well in a material formation.

BACKGROUND OF THE INVENTION

The purpose of stimulation is to the enhance productivity of the well. A common stimulation method for carbonate reservoirs is acid stimulation whereby the selected acid is allowed to chemically react with the reservoir rock, which leads to dissolution and enhanced productivity.

For wells completed open-hole, a complicating factor is the acid placement, i.e. the ability to distribute acid across the entire reservoir section. Bull-heading acid from the surface typically results in a mediocre stimulation treatment because the majority of the acid is spent reacting at the heel of the well.

The solution to the acid placement challenge is addressed by the limited-entry liner (LEL) technique, also denoted as controlled-acid jetting (CAJ). The key concept is to distribute small holes of varying sizes and frequency in the liner. These holes act as flow restrictions, which leads to mechanical diversion of flow along the liner. An appropriate hole size distribution design is capable of ensuring that the entire reservoir section is treated with acid. Aspects of the hole size distribution has been addressed in a number of references.

A further complicating factor is to ensure maximum acid penetration into the reservoir rock. Acid is an expensive commodity and should not be spent on dissolving all the rock in the near-wellbore area. Rather, the stimulation programme should be designed in such a way that acid penetrates as furthest as possible into the formation because this situation leads to the highest negative skin and hence the highest productivity index.

Lab experiments by a number of authors clearly show that for any given rock, acid penetration depends on the interstitial velocity of acid. There exists an optimum velocity, which minimizes the amount of acid needed to generate dissolution patterns known as wormholes. This optimum velocity depends on the rock, and the acid system (type, concentration, temperature). In addition to ensuring uniform acid coverage, the hole-size distribution must also be designed in such a way that it maximizes the propagation of wormholes.

Problem pertains to acid stimulation of both vertical and horizontal wells. The challenge is to achieve uniform stimulation throughout the completed well trajectory. Some operators choose not to stimulate the wells, others bullhead from the wellhead, others stimulate through a coiled tubing. Segmented completions which allow acidization in stages and use of diverters is employed. A few operators make use of the Limited Entry Liner (LEL) concept, but does not describe a comprehensive workflow for the hole size design. The design of LEL in terms of varying hole sizes and frequency remain a subject matter of challenge because of multiplicity of considerations.

EP1 184 537B1, the authors describe the LEL concept (called controlled acid jet) for matrix-acid stimulation and develop a very simple steady-state model using polynomial approximation with orthogonal collocation. However, their model assumes constant friction factor and does not describe a workflow for design of the optimum hole size distribution. Their model does not estimate the maximum design rate, does not take into account the experimental wormhole curve, does not have a skin model and is unable to estimate the required acid coverage and the optimum distance between holes.

US8,321,190 B2, the authors model a limited-entry liner with a transient model. The flow equations are the same as in the current work, but their numerical solution scheme uses the finite-difference method to solve for pressure and rate in the liner whereas as in this work, polynomial approximation with orthogonal collocation is used. Their model is transient, whereas the current work describes a steady-state solution. Their workflow does not allow design of the actual hole size distribution but is used to analyse data from an existing stimulation job.

The teachings of the prior art does not solve the problem. For example the assumption of constant friction factor in EP1 184 537B1 does not bode well for the actual phenomenon. They have also not laid out design basis for optimum hole size distribution. It cannot estimate maximum design rate and required acid coverage. The work did not incorporate experimental wormhole curves and skin model. US8,321,190B2 used a transient model. The teachings also did not describe optimum hole size distribution.

US 2016/245049 A1 discloses a controller for controlling an apparatus for performing a wellbore intervention or process, a corresponding processing device and method for simulating and/or controlling consecutive flow of a plurality of fluids in a wellbore of arbitrary geometry.

OBJECT OF THE INVENTION

The invention, which will be described in further detail in subsequent paragraphs, consists of a newly developed method and system for stimulating a well, which addresses, at least partly, the afore-mentioned challenges in a novel and inventive way.

# EP 3 922 811 B1

## SUMMARY OF THE INVENTION

It is thus an object of the present invention to provide an accurate and efficient numerical solution strategy for providing an initial estimate of the number of holes per segment which honours the acid coverage per segment and the drop in pressure (dp) across the last hole, in particular in the context of acid stimulation of wells completed in a carbonate reservoir with a Limited-Entry-Liner or LEL liner. The invention is defined by the method of independent claim 1, the data processing system of claim 9 and the computer program product of claim 11. Other aspects of the invention are defined by the dependent claims.

According to a first aspect of the invention the accuracy of simulations of fluid transport in a system for stimulating a well in a material formation of a resource reservoir can significantly be improved by including a workflow for design of the optimum hole-size distribution. Therefore optimized hole-size distribution in the liner of a LEL liner system is modelled, which results in an improved modelling accuracy and providing an improved construction and operation of the stimulation system. In particular, providing an initial estimate of the number of holes per segment which honours the acid coverage per segment and the dp across the last hole, such that the initial estimate can be found from the relationship between interstitial velocity, pump rate, and total cross-sectional hole area for a particular discharge coefficient and liner configuration.

According to some embodiments, it is a further object to improve the accuracy of the simulation by ensuring that the annulus pressure remains below fracturing pressure. The maximum allowed pump rate is dictated by the permeability, the fluid viscosity, the length of the completed interval, the skin, and the difference between annulus pressure and reservoir pressure.

According to some embodiments, it is a further objective to improve the accuracy of the simulation by estimating wormholing characteristics to facilitate an optimal hole-size distribution.

The wormholing estimate includes a nodal analysis calculation performed to estimate the downhole temperature at the heel of the liner, and based on the choice of the acid, the permeability and the temperature, the optimum velocity for wormhole propagation is estimated together with the anticipated pore volume to breakthrough.

According to some embodiments, the model accuracy has been improved by providing a method comprising estimation of the total number of holes and dp in pressure across the last hole. Based on the optimum velocity and the calculated design pump rate, the total cross-sectional area of the holes is calculated, wherein the area is linearly correlated with the dp across the last hole.

According to another aspect, a data processing system is configured to perform the steps of the method described herein.

According to yet another aspect, the invention relates to a method of stimulating a well by means of a workflow system for adjusting the hole-size distribution which honours the acid coverage per segment and the drop in pressure (dp) across the last hole in the context of acid stimulation of wells completed in a carbonate reservoir with a LEL liner. The method comprises:

- performing a series of algebraic equations for an initial hole-size distribution guess;
- calculating acid coverage and dp across the last hole;
- comparing acid coverage and dp across the last hole against design variable in a first iteration;
- evenly decreasing the number of holes across a segment for the next iteration until dp across the last hole is honoured; or
- evenly increasing the number of holes across a segment for the next iteration until dp across the last hole is honoured, as a first step; and
- performing a second step which includes;
- redistributing existing number of holes between segments as a first iteration, wherein;
- segments, where the calculated acid coverage is the furthest away from design values, exchange one hole;
- performing the next iteration until acid coverage is honoured; and
- performing the first step and the second step until dp across the last hole and acid coverage is honoured.

According to yet another aspect, the invention relates to a method of stimulating a well by means of a workflow system for adjusting the hole-size distribution which honours the acid coverage per segment and the drop in pressure (dp) across the last hole in the context of acid stimulation of wells completed in a carbonate reservoir with a LEL liner. The method comprises:

- running a simulation once the dp across the last hole and acid coverage is honoured to determine the wellhead pressure;
- adjusting the friction reducer concentration and re-running the simulation if the wellhead pressure exceeds the maximum pressure rating; and/or
- increasing the tubing ID in presence of existing friction reducer; and/or

- reducing the pump rate, such that the wellhead pressure rating is maintained below a maximum pressure rating.

According to yet another aspect, the invention relates to a method of stimulating a well by means of a workflow system for adjusting the hole-size distribution which honours the acid coverage per segment and the drop in pressure (dp) across the last hole in the context of acid stimulation of wells completed in a carbonate reservoir with a LEL liner. The method comprises:

- running a simulation to determine whether the distance between LEL holes, defined as the length of the stimulate reservoir section divided by the number of holes, should not exceed twice the expected final wormhole radius;
- increasing the LEL hole size by 1mm if the distance between LEL holes is too small, and repeating the simulation; or
- decreasing the LEL hole size by 1mm if the distance between the LEL is too large, and repeating the simulation; or
- proceeding with an output of results if the LEL holes is close or equal to twice the wormhole radius.

In one embodiment the model describes a first order non-linear boundary value problem and consists of two first-order coupled non-linear differential equations with boundary conditions at each end of the interval of the independent variable, coupled with a set of algebraic equations, wherein polynomial approximation is used to solve the numerical model.

According to yet another aspect, the method of stimulating a well by means of a workflow system for adjusting the hole-size distribution which honours the acid coverage per segment and the drop in pressure (dp) across the last hole in the context of acid stimulation of wells completed in a carbonate reservoir with a LEL liner in which the constraints of;

- annulus pressure exceeding minimum reservoir pressure to avoid cross-flow inside wellbore;
- annulus pressure does not exceed fracturing pressure to avoid fracturing;
- wellhead pressure does not exceed maximum design pressure rating;
- cross-sectional area of all LEL holes combined may be equal to or exceed a minimum cross-sectional area to avoid creating an additional pressure drop during normal production or injection of the well after stimulation;
- average distance between two neighbouring LEL holes may be equal to twice the wormhole radius; and
- liner ID not exceeding the wellbore size, are honoured.

According to yet another aspect, the method of stimulating a well by means of a workflow system for adjusting the hole-size distribution which honours the acid coverage per segment and the drop in pressure (dp) across the last hole in the context of acid stimulation of wells completed in a carbonate reservoir with a LEL liner. The method comprises further:

- input of one or more of the following parameters; average reservoir pressure per segment, fracture propagation pressure, permeability per segment, porosity, length of the completed interval, wellbore radius, tubing ID, liner ID, pipe roughness, acid properties, number of segments, desired acid coverage per segment, hole size per segment and/or discharge coefficient in a series of algebraic equations for an initial hole-size distribution guess.

According to yet another aspect of the invention, a data processing system is configured to perform the steps of the method of stimulating a well as described herein.

The term data processing system includes any electronic system or device having a processor configured to perform the step of the method, and to communicate the outcome of those steps to a user of the system or device. Such system or device includes, but is not limited to, a computer, a laptop, a handheld electronic device, or electronic workstation.

BRIEF DESCRIPTION OF THE DRAWINGS

These and other features of the invention will become more apparent by the following description of the embodiment, which is made by way of example, with reference to the accompanying drawings in which:

Figure 1: shows a schematic cross-sectional view of a well-bore and limited entry liner;
Figure 2: shows a schematic cross-sectional view of a well-bore which is sectionalized into segments by the use of packers;
Figure 3: shows a flow diagram, depicting the implementation of the current invention in a step-wise fashion;
Figure 4: shows a portion of figure 3 in greater detail;
Figure 5: shows, by way of images, the effect of rate on dissolution of an acid, by etching patterns in Texas cream chalk:

Figure 6: illustrates the impact of interstitial velocity to pore volume to breakthrough;

Figure 7: illustrates the relation between the temperature of the acid at the entrance of the liner under different pump rates and wellhead temperatures;

Figure 8: illustrates the volume of acid required to achieve a certain wormhole length based on the pore volume to breakthrough from core flood data;

Figure 9: illustrates the relationship between the pump rate, the dp across the last hole, the discharge coefficient and the total cross-sectional hole area;

Figure 10: illustrates the effect of Reynold's number on friction factor for different values of pipe roughness;

Figure 11: illustrates the impact of drag reduction on the friction factor, in a Prandtl-Karman plot;

Figure 12: illustrates the influence of drag reduction on friction pressure;

Figure 13: illustrates the zero's of orthogonal polynomials (100 in total) against the length of the liner;

Figure 14: illustrates skin factor as a function of stimulation coverage; and

Figure 15: illustrates skin factor as a function of wormhole radius.

BRIEF DESCRIPTION OF THE PREFERRED EMBODIMENTS

The limited-entry liner consists of a number of unevenly spaced holes with the purpose to distribute fluid, in this case acid, evenly along the reservoir section to be stimulated. The concept was initially described in 1963 by Shell for fracturing applications (Lagrone and Rasmussen, 1963) and is still widely applied. It was later adapted for matrix-acid stimulation and patented by Maersk Oil (known as controlled acid jetting or CAJ) and implemented in North Sea chalk reservoirs on a large scale, see Hansen (2001) and Hansen and Nederveen (2002). Since then, this novel stimulation concept has been tested by various operators such as ConocoPhilips (Furui et al., 2010a,b), Petrobras (Fernandes et al., 2006), ExxonMobil (Sau et al., 2014; Troshko et al., 2015), ZADCO (Issa et al., 2014) among others (Mitchell et al., 2014; van Domelen et al., 2011, 2012). Rodrigues et al. (2007) provided a good general overview of stimulation techniques for low-permeability reservoirs and Shokry (2010) described the acid stimulation practice in ADNOC for offshore reservoirs.

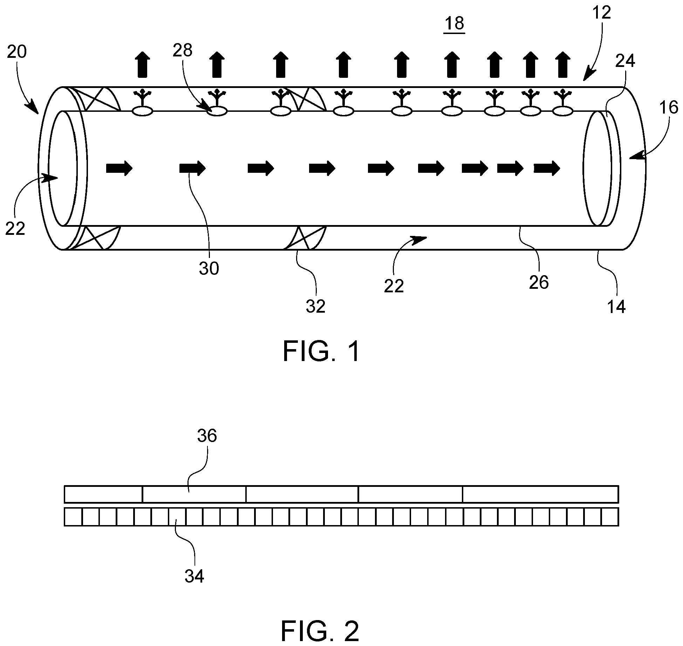

Figure 1 shows a schematic cross-sectional view of a well-bore 12. The well-bore 12 is conventionally formed by techniques commonly known in the art, and includes a wall 14 created by the drilling process, a leading end 16, which extends into the formation 18, and a trailing end 20 for accessing the well-bore.

A limited-entry liner 20 is introduced into the well-bore 12. The liner 20 has an open end 22 and opposed sealed end 24. An annulus 22 is formed between the wall 14 and outer surface 26 of the liner.

The liner 20 is provided with a number of pre-formed holes 28 that form flow passages between the interior of the liner 20 and the annular space 22. The holes 28 have a shape and location that comply with particular, pre-defined specifications.

Typically, the distances between adjacent holes 28 along the liner 20 decrease towards the end 24 of the liner.

The acid is pumped into the liner in the liner 20 and exits holes 28 at high velocities resulting in jetting into the formation 18. By limiting the number and size of holes, a choke effect is obtained and a significant pressure drop occurs between the inside and the outside of the liner during stimulation. A non-uniform geometric distribution of the holes is used to compensate for the friction pressure drop along the liner section. This means that the average hole spacing decreases towards the bottom of the liner. The open annulus 22 outside the liner in combination with the overpressure on the inside of the liner (due to the choking over the holes) ensures that the acid eventually reaches the bottom of liner, and the well is thus stimulated along its full length.

Acid is bull-headed from the surface and enters the liner 20 in the direction of arrows 30. The liner does not have to be horizontal but very often is. When acid reaches the first hole 28, which has a size of 4-7 mm, the pressure drop across the hole is so high that only a small portion of the acid exits the liner through the hole; the remaining portion continues along the liner until it reaches the next hole where the same process is repeated. An appropriate hole-size design makes it possible to honour a specified acid coverage, defined as barrels of acid per feet of reservoir section. Prior to the stimulation, the mud can be circulated out so that only completion brine with the right density is found in the wellbore 12.

The acid stimulation process is modelled by discretizing the wellbore 12 into a number of nodes 34, typically 100-400. The nodes do not need to have the same size. From a practical design point of view, the wellbore is split into a smaller number of segments 36. These segments may be physically isolated from each other on the annulus side by hydraulic packers 32 (not shown) but do not have to. Nodes can overlap between two segments, as shown in Figure 2.

Displacement of brine by acid is considered to occur by single-phase plug flow with minimal dispersion. The negative excess mixing volume is not taken into account. The liner 20 is closed at sealed end 24 before stimulation and it is not cemented, which means that fluid can in principle flow in the annulus 22 along the well-bore trajectory before packers 32 are set. In practice, annulus flow occurs predominantly due to jetting of acid through the holes 28, perpendicular to the wellbore. Annulus flow along the liner can be ignored for practical modelling purposes.

The completion design, and the associated modelling workflow covered in this document, allows for reservoir segmentation using packers and the resulting liner is hence referred to as a segmented limited-entry liner. The desired acid coverage can be specified per segment to take into account differences in porosity, permeability, initial water saturation, and reservoir pressure. The number of segments for modelling the process can be larger than the number of packer-isolated intervals.

Design of the hole-size distribution depends primarily on liner geometry and flow rate, which in turn is governed by reservoir properties, i.e. reservoir permeability. Acid stimulation is inherently transient in nature because the skin factor at any given position along the well changes with time from a positive value initially (caused by a mud filter cake) towards a negative value once the acid has reacted with the reservoir rock minerals. If the skin evolution over time is uniform along the well, it will not affect the flow distribution, which means that the overall process can be modelled based on steady-state principles.

The invention consists of a comprehensive algorithm for designing the hole-size distribution for limited-entry liners. The next sections describe the algorithm for designing a hole-size distribution which achieves a specified (often uniform) distribution of acid volume per interval length, also known as acid coverage.

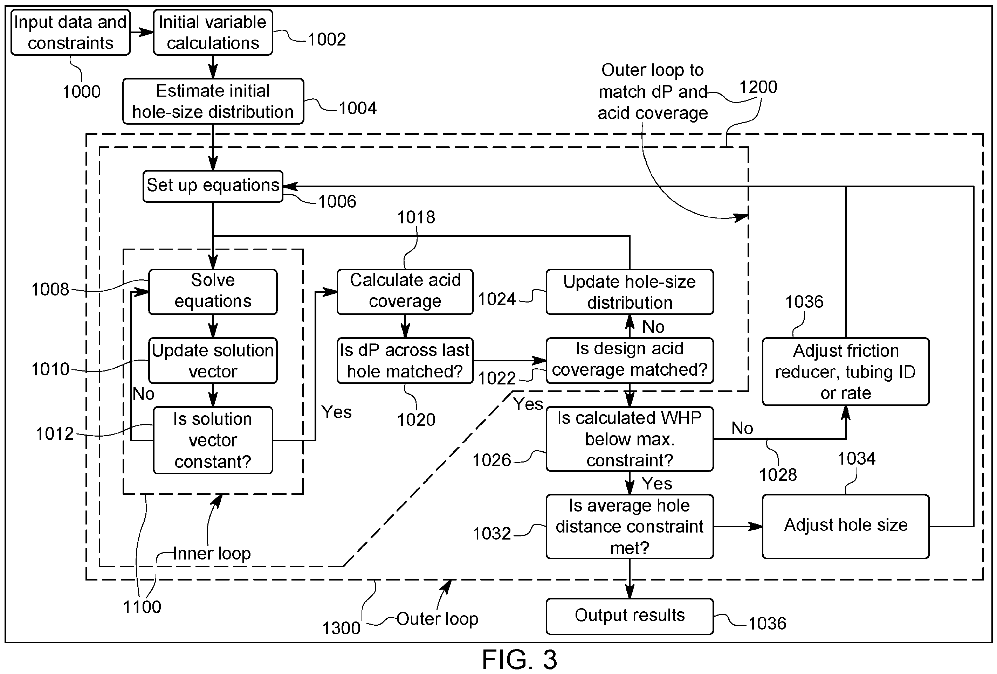

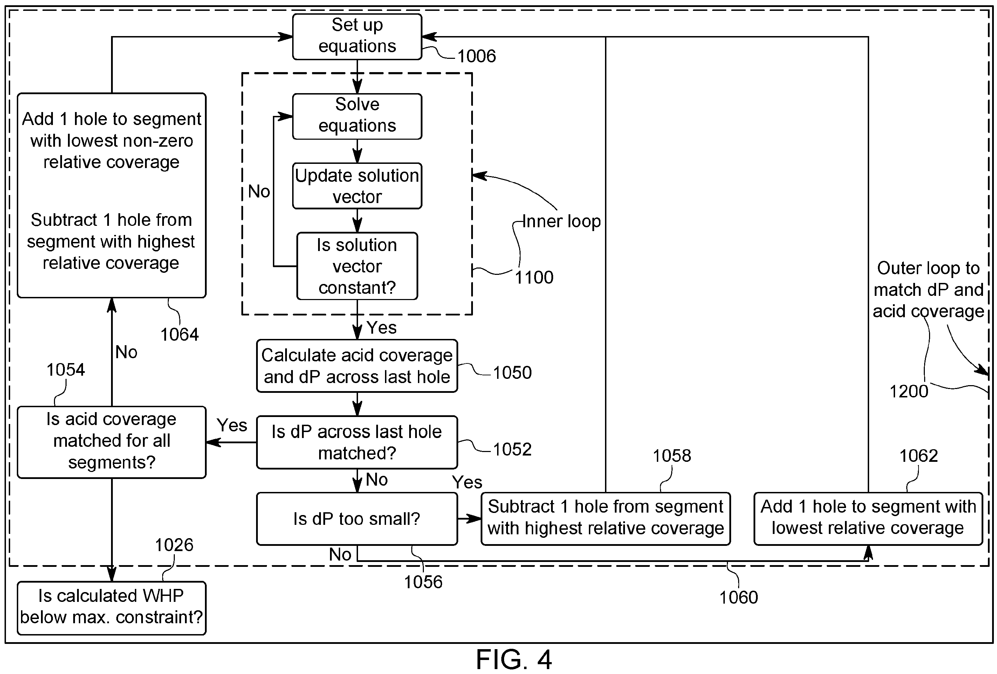

The algorithm is shown schematically in Figures 3 and 4. Figure 3 shows the overall algorithm whereas Figure 4 shows a more detailed part of Figure 3. The algorithm is discussed by reference now to Figure 3 and the first block, input data and constraints 1000.

Input data and constraints 1000:

As a starting point for implementation of the algorithm, input data constraints are entered into the system. The input data is made up of rock properties, completion data, fluid properties and other data, such as pump rate, number of nodes for the numerical algorithm, pressure drop across the last hole of the liner and annulus pressure. These inputs are either known, or may be sourced from historical data from the wellbore.

The algorithm defines certain constraints which must be adhered to in the functioning of the system. These constraints form part of the input data and constraints 1000. The constraints includes, but are not limited to; annulus pressure must exceed minimum reservoir pressure to avoid cross-flow inside wellbore; annulus pressure must not exceed fracturing pressure to avoid fracturing; wellhead pressure must not exceed maximum design pressure rating - in turn this impacts the design rate and/or the amount of friction reducer to be added; cross-sectional area of all LEL holes combined should be equal to or exceed a minimum cross-sectional area to avoid creating an additional pressure drop during normal production or injection of the well after stimulation - this impacts the number and size of the holes; average distance between two neighbouring LEL holes should equal twice the wormhole radius - this impacts the pressure drop across the last LEL hole which is a design variable; and, the liner ID cannot exceed the wellbore size

Moving on to the next step, as shown in Figure 3 block 1002

Initial variable calculations 1002:

Based on the input per segment, the maximum rate per segment is found by applying the transient inflow equation. Note that although the well is horizontal, it acts as a vertical well in the early injection phase because the boundaries have not been felt. Hence, the reservoir section length, L, replaces the reservoir thickness, H.

$$Q_i = \frac{P_{stim}-P_{res,i}}{1440} \times \frac{k_l \times L_1}{162.6 \times \mu_{max} \times B_{acid} \times [log_{10}(\varepsilon_i \times T) - 3.23 + 0.87 \times S_i]} \qquad \text{Equation 1}$$

B is the acid formation volume factor, which is in the range 1.0 to 1.1. In practice, it is assumed to be 1. The viscosity is the maximum value of the oil or gas viscosity and the acid viscosity. In heavy oil reservoirs, the transient phase injectivity is initially controlled by the oil properties. Thus,

$$\mu_{max} = \max(\mu_o, \mu_{acid}) \qquad \text{Equation 2}$$

The permeability will see a contribution from the two horizontal directions as well as the vertical direction:

$$k_i = \sqrt[3]{k_{x,i} k_{y,i} k_{z,i}} \qquad \text{Equation 3}$$

The vertical/horizontal permeability ratio may attain values in the range 0.01 to 1.0. For the current application, the value is close to 1, which makes the overall permeability equal to the horizontal permeability.

The diffusivity is given as

$$\varepsilon_i = \frac{k_i}{\varphi \times \mu_{max} \times c_{tot} \times r_w^2} \qquad\qquad \text{Equation 4}$$

Where the total system compressibility is given as a contribution from the rock and the fluid phases present in the pore space.

$$c_{tot} = c_{rock} + S_w \times c_w + (1 - S_w) \times c_o \qquad\qquad \text{Equation 5}$$

rw refers to the wellbore radius. In gas reservoirs, co equals gas compressibility.

The maximum pump rate allowed is then the sum of the individual segment rates:

$$Q = \sum_i^n Q_i \qquad\qquad \text{Equation 6}$$

However, any segments which must be left unstimulated and therefore require joints without holes, do not contribute to the calculation of the total rate. To start the design algorithm detailed later, the actual design rate is taken as a value 10-30% lower than the maximum allowed rate. This value may be adjusted in a subsequent iteration.

T is the total pump time calculated from the acid coverage and length of all the segments

$$T = \frac{\sum_i^n c_{acid,i} \times L_i}{Q_{design}} \qquad\qquad \text{Equation 7}$$

It is noted that T depends on Q, which depends on T.

Research into matrix-acid stimulation fundamentals took off in the 1980's with the pioneering work of Fogler and co-workers from the University of Michigan (Hoefner et al., 1987; Hoefner and Fogler, 1989; Bernadiner et al., 1992; Fredd and Fogler, 1996, 1997, 1999; Fredd et al., 1997) who demonstrated that the acid reaction with the rock gives rise to different etching patterns depending on the type and concentration of acid as well as the velocity and the temperature. Key subsequent contributions in the literature to the current understanding includes work by Halliburton (Gdanski and Norman, 1986; Gdanski and van Domelen, 1999; Gdanski, 1999), Buijse and Glasbergen (2005), and Hill and coworkers from Texas A&M University (Al-Ghamdi et al., 2014; Dong et al., 2014, 2016; Dubetz et al., 2016; Etten et al., 2015; Furui et al., 2005, 2008, 2010a,b; Izgec et al., 2008; Ndonhong et al., 2016, 2018; Sasongko et al., 2011; Schwalbert et al., 2018; Shirley et al., 2017; Shukla et al., 2006). Further references to experimental and theoretical studies on wormhole growth are listed within these references.

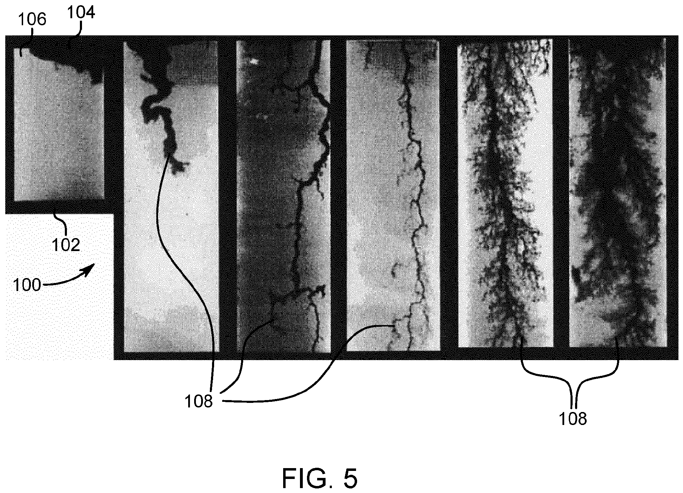

Figure 5 shows the effect of rate on dissolution through a series of images 100. A low rate leads to uniform dissolution and hence a very inefficient usage of the acid. This is shown by the image to the far left 102. In the image the acid 104 has not permeated the formation 106 to any appreciable extent. At slightly higher rates (i.e. moving from left to right in the images), the acid creates wormholes 108 through the rock. In fact, any acid formulation has an optimum velocity at which the least volume of acid is required to etch a pattern from inlet to outlet. This volume is called the pore volume to breakthrough 202. Note that 15% HCl corresponds to 4.4M, hence the 0.5M concentration used in the experiment is quite low.

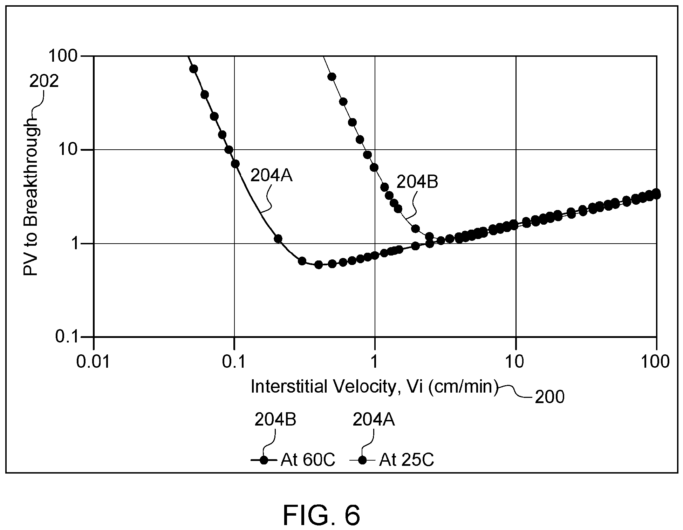

Figure 6 illustrates the impact of interstitial velocity 200 on pore volume to breakthrough 202 at two different temperatures 204A (depicted by the dot-dash line) and 204B (depicted by the solid line). A temperature increase (i.e. from temperature 204A at 25oC to temperature 204B at 600C) leads to higher reaction rate and hence faster dissolution; optimum wormhole growth therefore requires a higher acid velocity to avoid spending all the acid near the wellbore. It is also clear that it is better to pump at a rate which is slightly above the optimal than below. In a low-permeability reservoir, the maximum pump rate is limited by the fracturing pressure, which may prevent the operator from reaching the optimum velocity. In such situations, it is necessary to select a different acid 104 formulation to shift the curve to the left and preferably also down.

The wormhole data can be reproduced with a model proposed by Buijse and Glasbergen (2005) containing two fitting constants, αand β, which can be reformulated in terms of the lowest point on the curve (optimum interstitial velocity 200, optimum pore volume to breakthrough 202)

$$PV_{bt} = \frac{v_{int,i}^{\frac{1}{3}}}{\alpha \times [1 - exp\,(-\beta v_{int,i}^2)]^2} \qquad\qquad \text{Equation 8}$$

Increased temperature 204 and increased HCl concentration both increase the optimum velocity 200 for wormholing. For low-permeability rocks where the optimum rate may be limited by the fracture propagation pressure, it may be beneficial to reduce the acid concentration, although the pore volume to breakthrough 202 increases and hence the volume of acid solution needed. If the acid concentration is halved then the volume must double to maintain the same number of moles. Several authors have investigated the effect of weaker acids, see Punnapala et al. (2014) and Shirley et al. (2014). A friction reducer may shift the PV curve upwards, which means that more acid is required to achieve the same skin.

Talbot and Gdanski (2008) proposed a general wormhole model where they correlate the two input parameters to the Buijse-Glasbergen model as a function of rock and acid properties as well as temperature. However, they do not specify the values of the constants in their correlation.

In this invention, we make use of a concept whereby we shift the default wormhole curve shown in Figure 6 up, down, left, or right as a function of the temperature 204, the permeability, and the acid type. Table 1 shows some rough rules-of-thumb when adjusting the optimum (lowest) point on the wormhole curve. Based on the default curve, the optimum point is shifted with the amount indicated. The optimum point cannot be lower than (0.1, 0.1). Values in the table are only indicative and serve to illustrate a concept.

Table 1: Optimum Wormhole growth parameters

| Case | T (F) | K (mD) | HCl Conc (%) | PVbt,opt (y) | Vi,opt (x) |
|---|---|---|---|---|---|
| Default | 70 | 5 − 20 mD | 15 | 1.0 | 1.0 |
| High permeability | 70 | > 20 mD | 15 | Add 0.5 | Add 1.0 |
| Low permeability | 70 | < 5 mD | 15 | Subtract 0.5 | Keep |
| Medium temperature | 70 - 200 | 1 − 20 mD | 15 | Add 0.5 | Add 1.0 |
| High temperature | > 200 | 1 − 20 mD | 15 | Add 0.5 | Add 2.0 |
| Strong acid | 70 | 1 − 20 mD | 20 - 28 | Subtract 0.5 | Add 0.5 |
| Weak acid | 70 | 1 − 20 mD | 5 -10 | Add 0.5 | Subtract 0.5 |

Acid reactivity increases with temperature 204, which means that the optimum velocity 200 for wormhole growth also increases. For low-permeability reservoirs, it can be difficult to reach the optimum velocity without fracturing the formation. Therefore, it is important to evaluate the downhole temperature of the acid 104 when it reaches the formation 106.

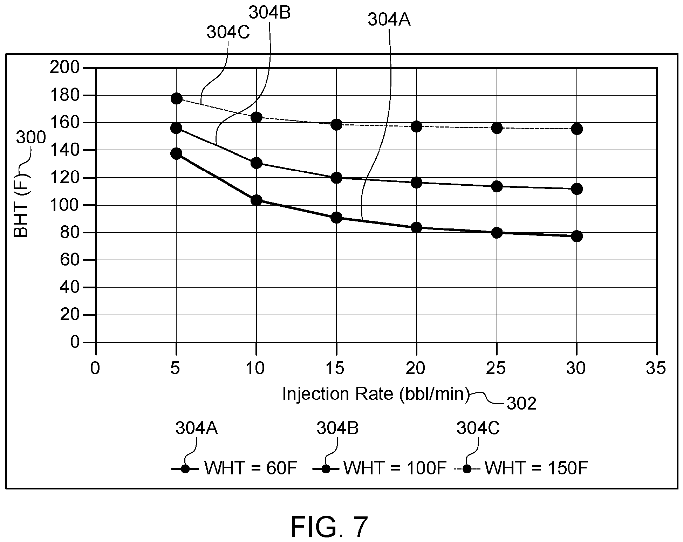

As shown in Figure 7, which illustrates the relation between the temperature of the acid at the entrance of the liner 300 under different pump rates 302 and wellhead temperatures 304. It is an advantage to inject at high rate and at the lowest possible wellhead temperature to limit the in-situ acid reactivity. This is shown by line 304A. As the temperature increases, lines 304B, and 304C we can see an increase in the acid reactivity at the entrance of the liner 300. Furthermore, any brine used to clean out the mud prior to the acid stimulation should be injected at the lowest possible temperature.

The temperature to be used for adjusting the wormhole curve is the temperature of the acid when it enters the reservoir, not the reservoir temperature.

Economides et al. (1994) derived a formula to determine the volume of acid required to achieve a certain wormhole length 400 based on the pore volume to breakthrough 202 from core flood data:

$$r_{wh} = \sqrt{r_w^2 + \frac{5.615V}{\pi\varphi L P V_{bt}}} = \sqrt{r_w^2 + \frac{5.615 \times COV}{\pi\varphi P V_{bt}}} \qquad \text{Equation 9}$$

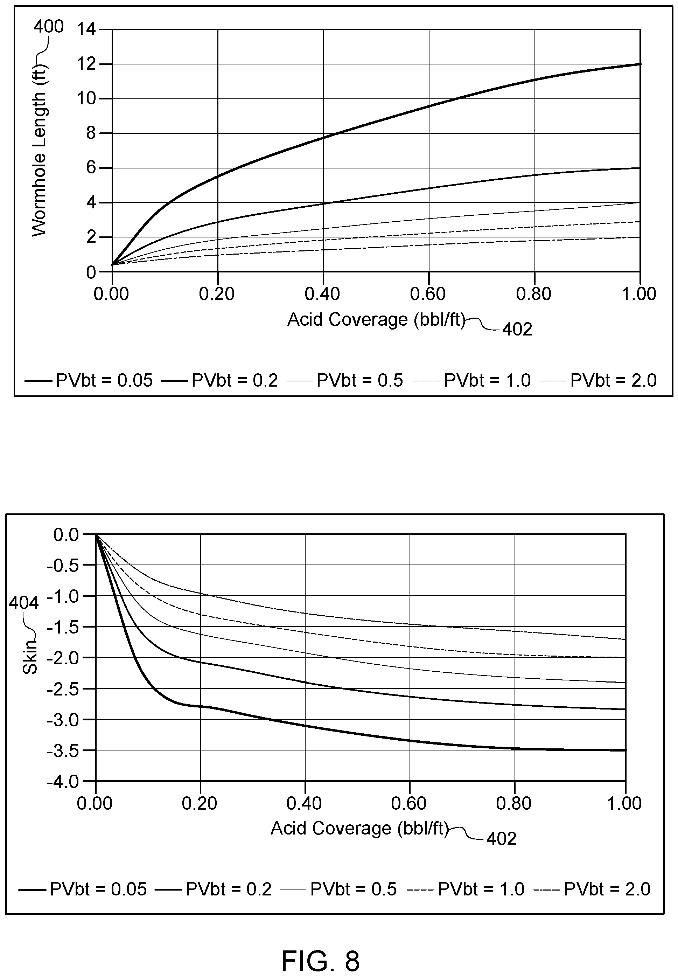

The formula is plotted in Figure 8. The ratio V/L is known as the acid coverage in bbl/ft 402. The equivalent skin 404 is given as:

$$S = ln\frac{r_w}{r_{wh}}$$

The algorithm aims to achieve a given final skin factor and then calculates the equivalent wormhole radius and then the required acid coverage. However, for economic considerations, the maximum acid coverage is limited by the acid volume which can be pumped. For instance, in offshore wells, the volume is limited by acid boat capacity. In the current application, the acid coverage should not exceed 1.5 bbl/ft.

Alternatively, the acid stimulation can be fixed, which enables calculation of the maximum, final wormhole length 400 and consequently the final, negative skin 404.

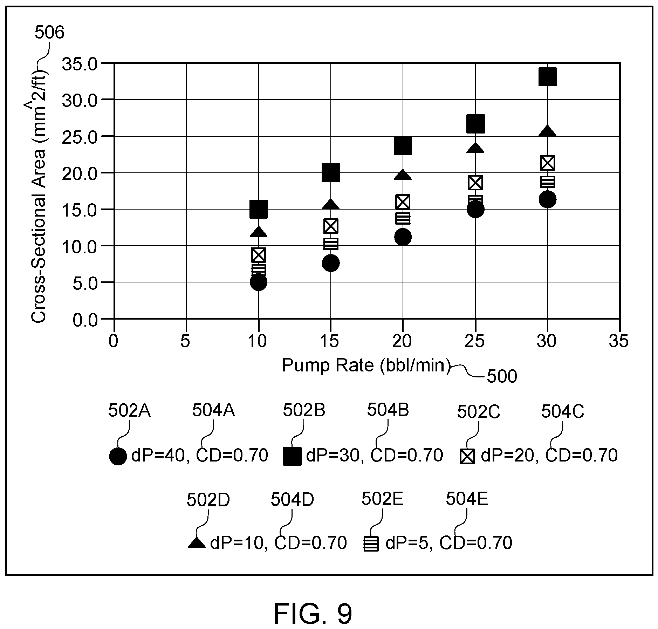

Figure 9 illustrates the outcome of a larger sensitivity analysis involving the pump rate 500, the dP across the last hole 502 (502A to 502E, respectively), the discharge coefficient 504 (504A to 504E, respectively) and the total hole cross-sectional hole area 506. The linear relationship is very clear and it is therefore possible to predict the dP 502 required to obtain a certain cross-sectional hole area 506. This constraint that the cross-sectional LEL hole area 506 must be equal to or larger than a minimum cross-sectional area to avoid imposing an addition pressure drop during production/injection after stimulation therefore results in a constraint on the dP across the last hole, which can be estimated based on the relationship provided by the sensitivity analysis. This is a novel concept.

Where;

$$A = aQ + b \qquad \text{Equation 10}$$

$$a = \alpha dP + \beta \qquad \text{Equation 11}$$

$$b = \gamma dP + \delta \qquad \text{Equation 12}$$

At this stage, we are able to estimate the initial hole-size distribution for the starting point of the algorithm. This is depicted by block 1004 in Figure 3.

The next step, block 1006, requires that the equations are set up. These are then solved as part of the following step, block 1008, dealt with later in this specification.

Set up equations 1004:

The equation of motion for isothermal one-dimensional pipe flow describes the pressure drop as a contribution from friction, gravity, and acceleration. The gravity term dominates in the vertical section of the wellbore, whereas friction losses become relatively more important in the horizontal section. The acceleration term is only required when velocity changes occur, such as when fluid enters the liner from the tubing (change in inner diameter), or whenever fluid exits through a hole in the liner. The contribution of the acceleration term to the total pressure drop is less than 5% and can often be neglected.

$$\frac{dP}{dx} = -\frac{dP_{fric}}{dx} - \frac{dP_{acc}}{dx} - \frac{dP_{grav}}{dx} \qquad \text{Equation 13}$$

$$\frac{dP}{dx} = -\frac{4\tau_w}{D} - \rho v\frac{dv}{dx} - \rho g\,cos\theta \qquad \text{Equation 14}$$

$\square$ is the angle relative to the z-axis and D is the pipe diameter. The acceleration term can be expressed in terms of volumetric flow Q instead of velocity v,

$$\frac{dP_{acc}}{dx} = -\rho \left[\frac{4}{\pi D^2}\right]^2 Q \frac{dQ}{dx}$$

Equation 15

In field units, this becomes

$$\frac{dP_{acc}}{dx} = -0.4754\rho \frac{Q}{D^4} \frac{dQ}{dx}$$

Equation 16

The Fanning friction factor, f, is defined in terms of the wall shear stress

$$\tau_w = f \frac{\rho v^2}{2}$$

Equation 17

Hence the friction pressure drop for Newtonian flow is:

$$\frac{dP_{fric}}{dx} = -\frac{4f}{D} \frac{\rho v^2}{2}$$

Equation 18

Friction pressure loss, in psi/ft, for pipe flow of Newtonian fluids becomes:

$$\frac{dP_{fric}}{dx} = -\frac{0.03873\rho v^2}{D} = -\frac{11.4015 f \rho Q^2}{D^5}$$

Equation 19

For laminar flow the Fanning friction factor is linked to the Reynolds number,

$$f = \frac{16}{Re}$$

Equation 20

The Reynolds number is given as

$$Re = 15916 \frac{\rho Q}{D\mu}$$

Equation 21

Friction pressure loss for annulus flow of Newtonian fluids in concentric pipes:

$$\frac{dP_{fric}}{dx} = -\frac{0.03873\rho v^2}{D_{inner,ann} - D_{outer,pipe}} = -\frac{11.4015 f \rho Q^2}{(D_{inner,ann} - D_{outer,pipe})\left(D_{inner,ann}^2 - D_{outer,pipe}^2\right)^2}$$

Equation 22

For laminar flow in the annulus, the Fanning friction factor is defined as:

$$f = \frac{24}{Re}$$

Equation 23

The Reynolds number is given as

$$Re = 15916 \frac{\rho Q}{\mu(D_{inner,ann} + D_{outer,pipe})}$$ 

Equation 24

The pressure difference due to the static head is found from:

$$\frac{dP_{grav}}{dh} = 0.052\rho$$ 

Equation 25

Where h is the depth in ft TVD.

$$\frac{dh}{dx} = cos\theta$$ 

Equation 26

Thus,

$$\frac{dP_{grav}}{dx} = 0.052\rho \, cos\theta$$ 

Equation 27

Annular flow can occur if acid is first injected through a coiled tubing inside the production string followed by the main acid treatment injected into the production tubing while the coil is still in hole.

The Fanning friction factor for pipe flow in smooth pipes is described by the Prandtl-Karman equation:

$$\sqrt{\frac{1}{f}} = 4log_{10}(Re\sqrt{f}) - 0.4 = -4log_{10}\frac{1.26}{Re\sqrt{f}}$$ 

Equation 28

For rough pipes, the friction factor depends on the relative pipe roughness, □/D, and is given as

$$\sqrt{\frac{1}{f}} = 4log_{10}(Re\sqrt{f}) - 0.4 = -4log_{10}\left[\frac{1.26}{Re\sqrt{f}} + \frac{\varepsilon}{3.7D}\right]$$ 

Equation 29

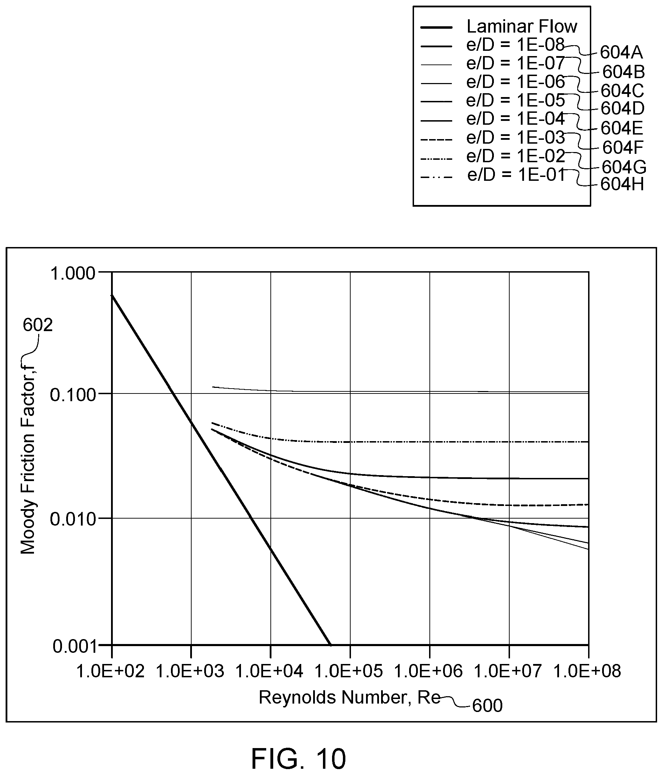

Figure 10 illustrates the effect of Reynold's number 600 on friction factor 602 for different values of pipe roughness 604 (604A to 604H, respectively). A typical relative roughness for a new pipe is 10-5.

Similarly, for annular flow in smooth pipes, the friction factor becomes

$$\sqrt{\frac{1}{f}} = 4log_{10}(Re\sqrt{f}) - 0.4 = -4log_{10}\left[\frac{1.26}{\frac{2}{3}Re\sqrt{f}}\right]$$ 

Equation 30

Finally, for annular flow in roughness pipes, the friction factor is given as

$$\sqrt{\frac{1}{f}} = 4log_{10}(Re\sqrt{f}) - 0.4 = -4log_{10}\left[\frac{1.26}{\frac{2}{3}Re\sqrt{f}} + \frac{\varepsilon}{3.7(D_{inner,ann} - D_{outer,pipe})}\right]$$ 

Equation 31

There is a potential discontinuity going from laminar to turbulent flow because the flow regime is poorly defined in the 1000-2000 Reynolds number region. This has no impact on the LEL hole design. Figure 10 shows that roughness plays a role only if it exceeds 0.0001.

Typical pumping rates are 5-40 bbl/min, depending on reservoir permeability and liner length. Such rates may lead to high surface pressures and thus require the upper completion to be designed appropriately. There is often a need to reduce the friction pressure loss to stay within safe operating limits and this requirement may necessitate the use of drag reducing agents (DRA). Drag reducers are mostly dilute polymer solutions, which lower the frictional resistance to flow in the turbulent regime when added to a solvent, for instance water or acid. Very low concentrations (a few thousand ppm) may in some instances reduce friction by as much as 70%. Friction reducers, may, however, cause reservoir damage, according to some studies.

When adding drag reducing agents a zone named the elastic sub-layer is formed between the viscous sub-layer and the Newtonian core. The extent of the elastic sub-layer will be governed by the amount and type of polymer, and by the flow rate. Within the elastic sub-layer the turbulence structure is significantly different from the Newtonian plug. The turbulent eddies are broken up, whereby the flow characteristics approach those of laminar flow. Therefore, it follows that the friction factor is independent of the relative roughness of the pipe in the presence of drag reducing agents.

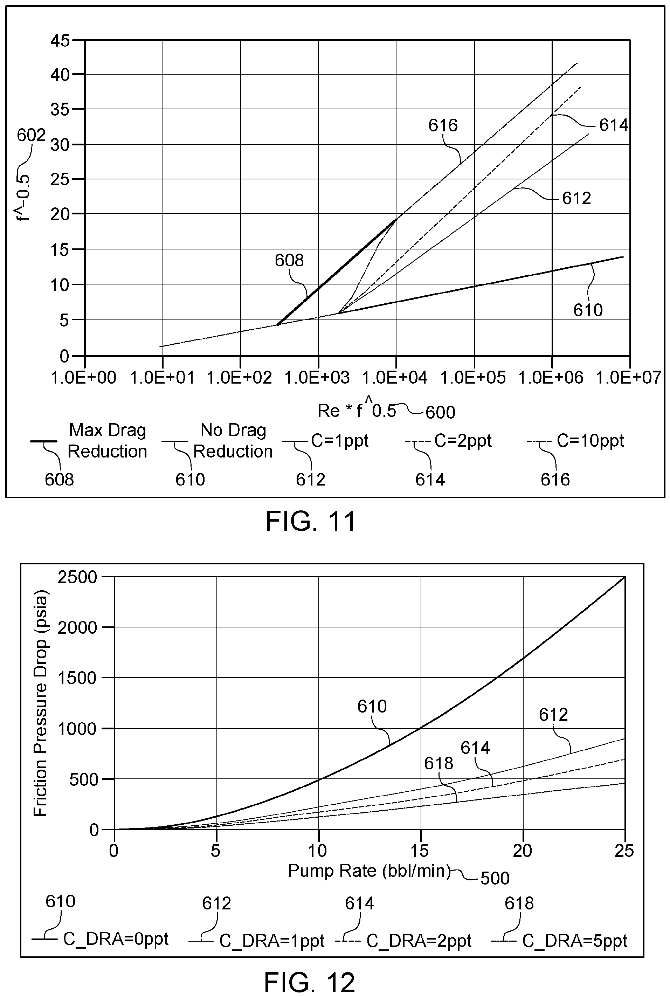

Maximum drag reduction is achieved when the elastic sub-layer extends to occupy the entire pipe cross-section. Drag reduction by dilute polymer solutions in turbulent pipe flow is bounded between the two universal asymptotes described by the Prandtl-Karman law for Newtonian turbulent flow and a maximum drag reduction asymptote. In between is the so-called polymeric regime in which the friction factor relations are approximately linear in Prandtl-Karman coordinates, see Figure 11. The polymeric regime may be described by two parameters: The wall shear stress at the onset of the drag reduction, $\square w^*$, (or equivalent the onset wave number $w^*$) and the slope increment,$\delta$, by which the polymer solution slope exceeds Newtonian slope. The onset of drag reduction occurs at a well defined onset wave number. For a given polymer solution $w^*$ is essentially the same for different pipe diameters. For solutions of a given polymer-solvent combination $w^*$ is approximately independent of polymer concentration.

When modelling the effect of the drag reducer, it is assumed that the fluid friction factor is reduced and that the fluid viscosity remains the same. Acid viscosity, via the Reynolds number, has a minor impact on friction losses at typical operating conditions, as seen from Figure 10.

The following formula, developed by Virk (1971, 1975) relates the friction factor to the concentration of the drag reducer for pipe flow:

$$\sqrt{\frac{1}{f}} = (4 + \delta)log_{10}\left(Re\sqrt{f}\right) - 0.4 - \delta log_{10}\left[\sqrt{2}Dw^*\right] \qquad \text{Equation 32}$$

The drag reduction model parameters are

$$\delta = kC_{DRA}^{\alpha} \qquad \text{Equation 33}$$

K and $\alpha$ are constants. The parameters are specific to the chemical used and must be fitted based on flow loop test data provided by the vendor.

The maximum drag reduction asymptote for pipe flow is described by:

$$\sqrt{\frac{1}{f}} = 19log_{10}\left(Re\sqrt{f}\right) - 32.4 \qquad \text{Equation 34}$$

Figure 11 shows the impact of drag reduction on the friction factor, in a Prandtl-Karman plot.

For the particular Drag Reducing Agent (DRA) 606 model constants used, the maximum asymptote 608 is only reached if the DRA concentration exceeds 2000 ppm. Without the addition of a DRA is shown by 610. Incrementally increasing the amount of DRA is shown by lines 612, 614 and 616 respectively.

In a 6" ID liner, a pumping rate of 25 bbl/min, equivalent of 36000 bbl/d, leads to a Reynolds number of approximately 321635, which is well inside the turbulent flow regime.

Figure 12 illustrates the influence of drag reduction on friction pressure 620 in a 10000 ft long 4.5" OD top completion string as a function of pump rate 500. Friction is reduced to 1/3 by adding 1000 ppm DRA. The concentration of DRA is similar to that as illustrated in Figure 11.

The limited-entry liner consists of a number of holes allowing fluid to exit the liner and enter the annulus and subsequently the reservoir. The holes are small compared to the liner dimensions, both in terms of length and diameter and can therefore be considered as an orifice. The pressure drop across N holes in the liner may be calculated as:

$$\Delta P_{hole} = -\frac{0.2369\rho Q_{hole}^2}{\left[N C_D D_{hole}^2\right]^2} \qquad \text{Equation 35}$$

Qhole is the flow rate in bbl/min through the holes. The positive direction is from the liner and into the annulus. Dhole is the inner diameter, in inches, of the holes in the liner. N is the total number of holes. CD is the dimensionless discharge coefficient, which accounts for the fact that the pressure loss is only partially recovered due to the short length of the hole (equal to the pipe thickness). Based on the work by Crump and Conway

(1988), a lower value of 0.56 is used for flow of water and gelled fluids in round sharp-edged drilled holes; values up to 0.80 are also possible, depending on fluid type and how the hole was actually drilled, see El-Rabba et al. (1997) and McLemore et al. (2013). CD should be considered a sensitivity variable during the first LEL design jobs. Drilling the holes at a slight angle may reduce the splash-back of unspent acid hitting the formation and improve the jetting process.

The model for the friction factor in the presence of a drag reducer is combined with the model for the friction factor for Newtonian turbulent pipe flow in rough pipes.

$$\sqrt{\frac{1}{f}} = -4 log_{10}\left[\frac{1.26}{Re\sqrt{f}} + \frac{\varepsilon}{3.7D}\right] + \delta log_{10}\left[\frac{Re\sqrt{f}}{\sqrt{2}Dw^*}\right] \qquad \text{Equation 36}$$

If no drag reducers are used then $\delta = 0$. If drag reducers are used the roughness is set to zero.

Inserting the expression for Reynolds number:

$$\sqrt{\frac{1}{f}} = -4 log_{10}\left[\frac{1.26D\mu}{15916\rho Q\sqrt{f}} + \frac{\varepsilon}{3.7D}\right] + \delta log_{10}\left[\frac{15916\rho Q\sqrt{f}}{D\mu\sqrt{2}Dw^*}\right] \qquad \text{Equation 37}$$

The hole distribution function, $N_{holes}^*$, is defined as number of holes per foot along the liner. For the present application, it is a step function reflecting different geometrical distribution of holes in sections along the liner. It can also be specified on the basis of the actual liner tally in which case the length of the individual sections equals the length of the joints.

A mass balance across a unit liner section states that the rate lost across a liner segment equals the rate through the holes along the same segment:

$$Q_{holes} N_{holes}^* = -\frac{dQ_{liner}}{dx} \qquad \text{Equation 38}$$

Rearrangement of terms gives

$$\frac{dQ_{liner}}{dx} = -N_{holes}^* D_{holes}^2 C_D \sqrt{\frac{P_{liner} - P_{ann}}{0.2369\rho}} \qquad \text{Equation 39}$$

For steady state applications the annulus pressure is a user-provided input, which should not exceed the fracture propagation pressure.

The model for the liner without an inner string includes two differential equations to describe the pressure and flow rate profile within the liner. In addition, a set of algebraic equations defines the Fanning friction factor for Newtonian turbulent flow with and without drag reducer. The inner diameter, the hole diameter and the well inclination may change along the liner.

$$\frac{dP_{liner}}{dx} = -\frac{11.4015 f\rho Q_{liner}^2}{D^5} - 0.4754 \frac{Q_{liner}}{D^4}\frac{dQ_{liner}}{dx} + 0.052\rho \, cos\theta \qquad \text{Equation 40}$$

**EP 3 922 811 B1**

The flow rate change inside the liner, which is equal to the flow through the holes, is described by:

$$\frac{dQ_{liner}}{dx} = -N^*_{holes} D^2_{holes} C_D \sqrt{\frac{P_{liner} - P_{ann}}{0.2369\rho}} \qquad \text{Equation 41}$$

It is clear that the liner pressure must exceed the annulus pressure at all times to avoid unwanted cross-flow from a segment with higher reservoir pressure. Zones with substantially higher or lower pressures should be isolated with packers to improve acid coverage control. Transformation into the dimensionless independent variable u=x/L, where L is the total length of the liner and introducing position-dependent constants gives:

$$\frac{dP_{liner}}{du} = -\alpha_1(u) f Q^2_{liner} + \alpha_7(u)\alpha_3(u) Q_{liner}\sqrt{P_{liner} - P_{ann}} + \alpha_2(u)$$

$$\text{Equation 42}$$

$$\frac{dQ_{liner}}{du} = -\alpha_3(u)\sqrt{P_{liner} - P_{ann}} \qquad \text{Equation 43}$$

$$\sqrt{\frac{1}{f}} = -4log_{10}\left[\frac{1.26\alpha_4(u)}{Q_{liner}\sqrt{f}} + \alpha_5(u)\right] + \delta log_{10}\left[\frac{Q_{liner}\sqrt{f}}{\alpha_4(u)\alpha_6(u)}\right] \qquad \text{Equation 44}$$

$$\alpha_1 = \frac{11.4015 L\rho}{D^5(u)} \qquad \text{Equation 45}$$

$$\alpha_2 = 0.052 L\rho \cos\theta(u) \qquad \text{Equation 46}$$

$$\alpha_3 = \frac{L N^*_{holes}(u) D^2_{holes}(u) C_D}{\sqrt{0.2369\rho}} \qquad \text{Equation 47}$$

$$\alpha_4 = \frac{D\mu}{15916\rho} \qquad \text{Equation 48}$$

$$\alpha_5 = \frac{\varepsilon}{3.7D} \qquad \text{Equation 49}$$

$$\alpha_6 = \sqrt{2} D w^* \qquad \text{Equation 50}$$

$$\alpha_7 = \frac{0.4754\rho}{D^4(u)} \qquad \text{Equation 51}$$

Boundary conditions:

$$Q_{liner}(u = 0) = Q_0 \qquad \text{Equation 52}$$

$$Q_{liner}(u = 1) = 0 \qquad \text{Equation 53}$$

The stimulation rates in bbl/min/ft are found from:

14

$$Q_{stim} = -\frac{dQ_{liner}}{dx}$$ 

Equation 54

The flow rate through the holes in bbl/min/hole is found from:

$$Q_{holes} = -\frac{1}{N_{holes}^*}\frac{dQ_{liner}}{dx}$$ 

Equation 55

The algorithm enters into the inner loop 1100. This lead by block 1008, Solve equations.

Solve equations 1008:

The model describes a first order non-linear boundary value problem and consists of two first-order coupled non-linear differential equations with boundary conditions at each end of the interval of the independent variable, coupled with a set of algebraic equations. The problem can be solved in at least two ways, either using a finite-difference scheme, see Mogensen and Hansen (2007), or with polynomial approximation. Following the approach outlined by Hansen and Nederveen (2002), polynomial approximation is used to solve the numerical model.

The liner is spatially discretised with N nodes, as will be described in the subsequent paragraphs. The solution vector, Y, is defined as an array containing the pressure, P, in each of the N nodes, the flow rate, Q, in each of the N nodes and the friction factor, f, in each of the N nodes.

$$Y^T = \left(P_{liner,1} \dots P_{liner,N}; Q_{liner,1} \dots Q_{liner,N}; f_1 \dots f_N\right)$$ 

Equation 56

The iteration scheme to be outlined in the subsequent paragraphs is somewhat sensitive to the guess of the initial solution vector. A safe starting guess is to assume that the pressure in the liner decreases linearly with position, while remaining larger than the specified annulus pressure. The same approach is taken for the rate inside each liner segment, which must equal the total flowrate at the inlet and zero at the end. The initial estimate of the friction factor should be 0.01 or lower. Note that since the flow rate is zero at the end of the liner, the flow regime will go from being turbulent around the heel towards laminar at the toe.

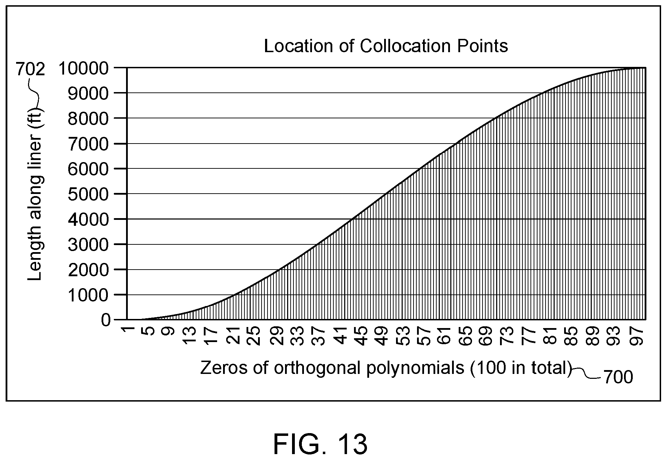

The N collocation points are found as zeros of N'th order orthogonal polynomials 700, against the length of the liner 702; in total there are N-2 interior points and 2 interval endpoints. Location of the zeros is shown in Figure 13 using 100 collocation points.

Use of polynomial approximation of order N gives:

$$P_N(x) = (x - x_1)(x - x_2) \dots (x - x_N)$$ 

Equation 57

Construction of Lagrange polynomials are defined by:

$$l_i(x) = \frac{P_N(x)}{(x - x_i)\frac{dP_N(x_i)}{dx}}$$ 

Equation 58

The nodes of the polynomial are found from the orthogonality condition:

$$\int_0^1 x^\beta (1 - x)^\alpha P_j(x) P_N(x)\, dx = 0; j = 0, N - 1$$ 

Equation 59

Expansion of the four dependent variables into an N'th degree Legendre interpolation polynomial ($\alpha = \beta = 0$) gives:

$$P_{liner,N}(u_i) = \sum_{j=1}^{N} P_{liner}(u_j)\, l_j(u_i)$$ 

Equation 60

$$Q_{liner,N}(u_i) = \sum_{j=1}^{N} Q_{liner}(u_j)\, l_j(u_i) \qquad\qquad \text{Equation 61}$$

$$\frac{dP_{liner,N}(u_i)}{du} = \sum_{j=1}^{N} P_{liner}(u_j)\frac{dl_j(u_i)}{du} \qquad\qquad \text{Equation 62}$$

$$\frac{dQ_{liner,N}(u_i)}{du} = \sum_{j=1}^{N} Q_{liner}(u_j)\frac{dl_j(u_i)}{du} \qquad\qquad \text{Equation 63}$$

Based on experience, the number of collocation points is set to 100 and is independent of the number of physical holes in the liner. Rewriting the equations gives the discretised model:

$$F_i(P_{liner}, Q_{liner}, f) = \sum_{j=1}^{N} P_{liner,j}\, l_j' + \alpha_{1,i} f_i Q_{liner,i}^2 +$$

$$\alpha_{7,i}\alpha_{3,i}Q_{liner,j}\sqrt{P_{liner,i} - P_{ann}};\, i = 1, N \qquad\qquad \text{Equation 64}$$

$$G_i(P_{liner}, Q_{liner}, f) = \sum_{j=1}^{N} Q_{liner,j}\, l_j' + \alpha_{3,i}Q_{liner,j}\sqrt{P_{liner,i} - P_{ann}};\, i = 2, N$$

$$\text{Equation 65}$$

$$H_i(P_{liner}, Q_{liner}, f) = -4log_{10}\left[\frac{1.26\alpha_{4,i}}{Q_{liner,j}\sqrt{f_i}} + \alpha_{5,i}\right] + \delta log_{10}\left[\frac{Q_{liner,j}\sqrt{f_i}}{\alpha_{4,i}\,\alpha_{6,i}}\right] - \sqrt{\frac{1}{f_i}}$$

$$\text{Equation 66}$$

$$H_N(P_{liner}, Q_{liner}, f) = f_N - 1 \qquad\qquad \text{Equation 67}$$

The maximum drag reduction asymptote is not included in the model formulation. In practice, use of drag reduction concentrations in the order of 1000-2000 ppm does not exceed the asymptotic line.

$$\alpha_{1,i} = \frac{11.4015L\rho}{D_i^5} \qquad\qquad \text{Equation 68}$$

$$\alpha_{2,i} = 0.052L\rho\, cos\theta_i \qquad\qquad \text{Equation 69}$$

$$\alpha_{3,i} = \frac{LN_{holes}^*(u_i)D_{holes,i}^2 C_D}{\sqrt{0.2369\rho}} \qquad\qquad \text{Equation 70}$$

$$\alpha_{4,i} = \frac{D_i\mu}{15916\rho} \qquad\qquad \text{Equation 71}$$

$$\alpha_{5,i} = \frac{\varepsilon}{3.7D_i} \qquad\qquad \text{Equation 72}$$

$$\alpha_{6,i} = \sqrt{2}D_i w^* \qquad\qquad \text{Equation 73}$$

$$\alpha_{7,i} = \frac{0.4754\rho}{D_i^4} \qquad\qquad \text{Equation 74}$$

Boundary conditions:

$$G_1 = Q_{liner,1} - Q_0 = 0 \qquad \text{Equation 75}$$

$$G_N = Q_{liner,N} = 0 \qquad \text{Equation 76}$$

Q0 is the specified pump rate. The stimulation rates in bbl/min/ft are found from:

$$Q_{stim,i} = -\frac{1}{L}\sum_{j=1}^{N} Q_{liner,j}\, l'_j \qquad \text{Equation 77}$$

The flow rate through the holes in bbl/min/hole is found from:

$$Q_{holes,i} = -\frac{Q_{stim,i}}{N^*_{holes}} \qquad \text{Equation 78}$$

The next step as part of the inner loop 1100, is to update the solution vectors, as shown by block 1010.

Update solution vectors 1010:

The 3N set of non-linear algebraic equations is solved using a Newton-Raphson iteration procedure. Given an initial estimate of the solution vector an improved estimate is obtained from:

$$Y^{k+1} = Y^k - [J^k]^{-1}\begin{bmatrix} F \\ G \\ H \end{bmatrix} \qquad \text{Equation 79}$$

The Jacobian matrix is defined with the following elements:

$$J = \begin{bmatrix} \dfrac{\partial F}{\partial P_{liner}} & \dfrac{\partial F}{\partial Q_{liner}} & \dfrac{\partial F}{\partial f} \\[2ex] \dfrac{\partial G}{\partial P_{liner}} & \dfrac{\partial G}{\partial Q_{liner}} & \dfrac{\partial G}{\partial f} \\[2ex] \dfrac{\partial H}{\partial P_{liner}} & \dfrac{\partial H}{\partial Q_{liner}} & \dfrac{\partial H}{\partial f} \end{bmatrix} \qquad \text{Equation 80}$$

The elements of the Jacobian matrix are set up as described below. The collocation matrix is defined as:

$$A_{ij} = \frac{\partial l_j}{\partial u_i} \qquad \text{Equation 81}$$

Function F (i = 1..N):

$$\frac{\partial F_i}{\partial P_{liner,j}} = \begin{cases} \dfrac{\partial l_j}{\partial u_i} & i \neq j \\[2ex] \dfrac{\partial l_j}{\partial u_i} + \dfrac{\alpha_{7,i}\alpha_{3,i}Q_{liner,i}}{2\sqrt{P_{liner,i}-P_{ann}}} & i = j \end{cases} \qquad \text{Equation 82}$$

$$\frac{\partial F_i}{\partial Q_{liner,j}} = 2\alpha_{1,i} f_i Q_{liner,i} + \alpha_{7,i}\alpha_{3,i}\sqrt{P_{liner,i} - P_{ann}} \quad i = j \qquad \text{Equation 83}$$

$$\frac{\partial F_i}{\partial f_j} = \alpha_{1,i} Q_{liner,i}^2 \quad i = j \qquad \text{Equation 84}$$

Function G (j = 2 ..N-1):

$$\frac{\partial G_i}{\partial P_{liner,j}} = \frac{\alpha_{3,i}}{2\sqrt{P_{liner,i} - P_{ann}}} \qquad \text{Equation 85}$$

$$\frac{\partial G_i}{\partial Q_{liner,j}} = A_{ij} = \frac{\partial l_j}{\partial u_i} \qquad \text{Equation 86}$$

$$\frac{\partial G_i}{\partial f_j} = 0 \qquad \text{Equation 87}$$

Function H (j = 1 ..N-1, i = j):

$$\frac{\partial H_i}{\partial P_{liner,j}} = 0 \qquad \text{Equation 88}$$

$$\frac{\partial H_i}{\partial Q_{liner,j}} = \frac{log_{10}e}{Q_{liner,i}}\left[\frac{4}{1+\frac{\alpha_{5,i}Q_{liner,j}\sqrt{f_i}}{1.26\alpha_{4,i}}} + \delta\right] \qquad \text{Equation 89}$$

$$\frac{\partial H_i}{\partial f_j} = \frac{log_{10}e}{2f_i}\left[\frac{4}{1+\frac{\alpha_{5,i}Q_{liner,i}\sqrt{f_i}}{1.26\alpha_{4,i}}} + \delta\right] + \frac{1}{2}f_i^{-3/2} \qquad \text{Equation 90}$$

$$\frac{\partial H_N}{\partial f_N} = 1 \qquad \text{Equation 91}$$

Boundary Conditions:

$$\frac{\partial G_1}{\partial P_{liner,j}} = 0 \qquad \text{Equation 92}$$

$$\frac{\partial G_1}{\partial Q_{liner,j}} = \begin{cases} 1 & j = 1 \\ 0 & j = 2..N \end{cases} \qquad \text{Equation 93}$$

$$\frac{\partial G_N}{\partial P_{liner,j}} = 0 \qquad \text{Equation 94}$$

$$\frac{\partial G_N}{\partial Q_{liner,j}} = \begin{cases} 0 & j = 1..N \\ 1 & j = N \end{cases} \qquad\qquad \text{Equation 95}$$

$$\frac{\partial G_N}{\partial f_j} = 0 \qquad\qquad \text{Equation 96}$$

The final step of the inner loop 1100 is to determine whether the solution vector is constant, block 1012.

Is solution vector constant 1012:

Typically, the Newton-Raphson technique will converge within 5 iterations using carefully selected relaxation parameters to guide the convergence during the first iterations. The method ensures that final convergence speed is quadratic.

The iterative inner loop will repeat by following arrow 1014, and restating resolving the equations, as set forth from block 1008.

This iterative inner loop 1100 finishes when the absolute change to the solution vector is below a certain threshold value, typically 1E-12. To avoid the possibility of an infinite loop, the procedure stops after a pre-specified number of iterations has been reached, typically in the range 10-20.

Once the solution vector is deemed constant, the next step is to follow arrow 1016 to calculate the acid coverage, depicted by block 1018.

Calculate acid coverage 1018:

Once the stimulation flow rates are calculated from the solution, the acid coverage per liner segment is the product of segment flow rate and pumping time. If the overall pump rate changes during the job, the stimulation rate for each segment changes.

$$C_{acid,i} = Q_{stim,i} \times T \qquad\qquad \text{Equation 97}$$

The transient period where the acid front moves through along the liner while displacing the brine must also be taken into account. However, this is compensated for when water displaces acid at the end of the job. The time it takes for the front to reach a given position i, is called the retention time, which is calculated recursively:

$$t_i = t_{i-1} + \frac{V_{liner,i}}{Q_{liner,i}} \qquad\qquad \text{Equation 98}$$

Since the liner flow rate gradually decreases towards zero at the heel, it is clear that it takes gradually longer time for the acid front to displace the brine out of the liner. In other words, the inner part sees acid for longer time than the outer part. The hole-size distribution should compensate for this. The retention time is therefore also a measure of the minimum time needed for water to displace acid from the liner at the end of the stimulation.

The next step is shown in block 1020, to determine if the dp across the last hole is matched. This step goes in combination with the following block 1022 which is to determine if design acid coverage matched?

Is the dp across the last hole matched 1020?:

The dP across the last hole is calculated as the difference between the pressure in the last node of the liner and the annulus stimulation pressure (which is constant and user-specified):

$$dP_{last\ hole} = P_{liner,n} - P_{stim} \qquad\qquad \text{Equation 99}$$

Is design acid coverage matched 1022?:

The difference between calculated and specified target acid coverage is given as

$$dCOV = \sum_{i=1}^{segments} |COV_{i,calc} - COV_{i,target}| \qquad \text{Equation 100}$$

This formulation ensures that the dCOV (acid coverage distribution) function is always positive. Hence, it must be minimized to obtain the best possible match. The relative acid coverage is determined as follows:

$$R_{cov,i} = \frac{COV_{i,calc}}{COV_{i,target}} \; if \; COV_{i,calc} > 0 \qquad \text{Equation 101}$$

Turning to Figure 4, the above two steps are combined into block 1050.

Whereas the inner loop 1100 consists of solving the material balance for a given combination of LEL holes, pump rate and other variables, the first part of the outer loop 1200 consists of adjusting the LEL hole size distribution to match both the desired pressure drop across the last hole, dP 1052, and the desired acid coverage for each segment 1054. The outer loop 1200 serves to honour both constraints at the same time.

Therefore, the hole size-distribution must be satisfied, as shown in block 1024

Update hole-size distribution 1024:

If the dP is too small 1056, then there are too many LEL holes and one LEL hole is then subtracted from the segment with the highest relative acid coverage 1058 and the material balance inner loop 1100, via block 1006, is then reinvoked.

If the dP is too large (arrow 1060), there are too few holes, and one hole is then added to the segment with the lowest, non-zero relative acid coverage 1062 and the material balance inner loop 1100, via block 1006, is reinvoked

Segments with zero acid coverage are not adjusted.

If the dP is close to the target value within a certain tolerance, then the acid coverage distribution dCOV is calculated 1054. At this point, the total number of LEL holes is correct but the holes just need to be redistributed among segments. One LEL hole is added to the segment with the lowest, non-zero relative acid coverage, whereas one LEL hole is subtracted from the segment with the highest relative acid coverage 1064. Then the inner loop 1100, via block 1006, is reinvoked and the procedure is repeated until the dCOV function reaches a minimum. Since the algorithm adjusts integer values, i.e. number of LEL holes, it is not possible for the dCOV function to be exactly zero.

Once the minimum dCOV function is reached, it must be determined if the calculated wellhead pressure (WHP) is below the wellhead pressure maximum constraint, as shown in block 1026.

Is calculated WHP below max. constraint?:

Every wellhead has a maximum pressure rating, such as 5000 psia, 6500 psia and higher. Similarly, every tubing has a maximum pressure rating. Therefore, if the reservoir pressure is high, the design rate may give rise to a wellhead pressure, which exceeds the pressure rating.

If the calculated wellhead pressure exceeds the maximum rating of the tubing (shown by arrow 1028), adjustment to the design (block 1030) requires the following steps:

Step 1: If the previous design was based on zero friction reduction, then add 2000 ppm friction reducer. Re-run the simulation.

Step 2: If friction reducer is already present, investigate the possibility to increase the tubing ID. Re-run the simulation.

Step 3: If step 2 is not possible, reduce the rate, re-run the simulation, and loop until the calculated WHP is below the maximum pressure rating of the tubing.

Next, the average hole distance constraint must be met, block 1032.

Is average hole constraint met?:

As described earlier, Economides et al. (1994) derived a formula to determine the volume of acid required to achieve a certain wormhole length based on the pore volume to breakthrough from core flood data:

$$r_{wh} = \sqrt{r_w^2 + \frac{5.615V}{\pi\varphi LPV_{bt}}} = \sqrt{r_w^2 + \frac{5.615 \times COV}{\pi\varphi PV_{bt}}}$$
Equation 102

The ratio V/L is known as the acid coverage in bbl/ft. The equivalent skin is given as

$$S = ln\frac{r_w}{r_{wh}}$$
Equation 103

Schwalbert et al. (2018) defined the stimulation coverage as twice the wormhole radius relative to the length of the perforated interval, which for LEL completions equals the distance between LEL holes.

$$C_s = \frac{2r_{wh}}{\Delta L_{holes}}$$
Equation 104

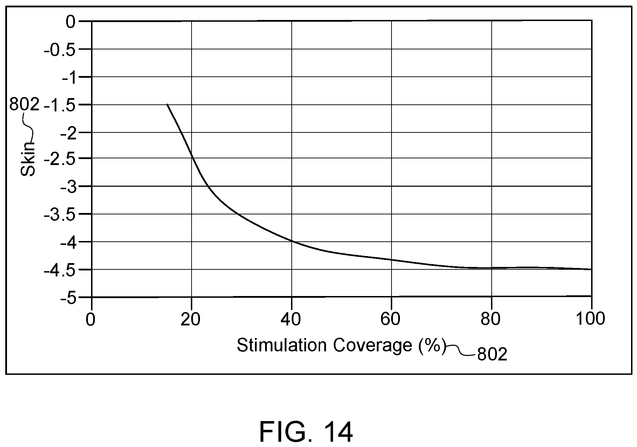

Turing to Figure 14 which illustrates skin factor as a function of stimulation coverage.

Therefore the skin factor 800 becomes constant when the stimulation coverage 802 reaches 50%.

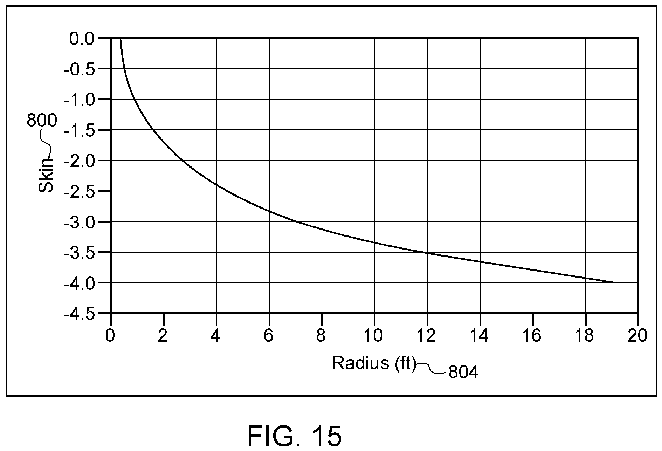

Figure 15 shows that an effective wormhole radius 804 of 20 ft would result in an equivalent negative skin factor 800 of -4, assuming that all the wormholes generated along the well have the same radius. Combining the two plots shows that the maximum distance between wormholes should not exceed twice the wormhole length. A skin of -3 for the entire well, for instance, means that the holes should be drilled with a maximum distance of 30 ft.

This means that the average distance between LEL holes, defined as the length of the stimulate reservoir section divided by total number of holes, should not exceed twice the expected final wormhole radius. The following check is therefore performed:

$$\Delta L_{holes} = \frac{L_{tot}}{n_{holes}} \le 2r_{wh}$$
Equation 105

If the average hole constraint is not met it becomes necessary to adjust the hole size, block 1034

Adjust hole size 1034:

Based on the evaluation of the above equation, the following possible actions are taken:

If the distance between LEL holes is too small, the LEL hole size can be increased by 1 mm and the entire simulation is then repeated.

If the distance between LEL holes is too large, the LEL hole size can be decreased by 1 mm and the entire simulation is then repeated.

If the average distance between LEL holes is close to or equal to twice the wormhole radius, the algorithm has converged with a final design and proceeds with output of results, block 1036.

Output results 1036:

Output results consist of the following items:

Node properties, including position, pressure, rate, friction factor, number of holes per foot, velocity, retention time, stimulation rate, cumulative volume of acid leaving the node through holes.

Segment properties, including segment number, segment interval, number of holes in segment, distance between holes, calculated and design acid coverage, acid coverage ratio, acid stimulation rate, acid velocity at the exit point of the holes, pore volume to breakthrough, final wormhole radius, and final skin factor

    Actual versus specified pressure drop across last holes
    Average overall distance between LEL holes
    Total number of LEL holes, total cross-section area of LEL holes, equivalent ID of total number of LEL holes
    Wellhead pressure and bottom-hole pressure during pumping
    Wellhead pressure and bottom-hole pressure immediately after shut-in, known as instantaneous shut-in pressure (ISIP)

Acid volume required, total pumping time, assuming pumping occurs at design rate.

Total liner volume, total tubing volume, displacement volume, retention time

A detailed tally list containing the number and size of LEL holes for each joint to be run in hole, as well as the order in which the joints must be run in hole. Furthermore, the total number of joints with a particular number and size of holes is summarised, such as number of joints with 0, 1, 2 or 3 LEL holes of size 4 mm, 5 mm, or 6 mm etc.

Wellhead pressure and bottom-hole pressure during pumping are calculated from the pressure at the first node and then subtracting hydrostatic pressure and adding friction up to the given gauge depth.

Wellhead and bottom-hole instantaneous shut-in pressures ISIP are calculated from the pressure at the first node and then subtracting hydrostatic pressure up to the given gauge depth. The friction is zero because the rate is zero during an ISIP.

Calculation procedure:

Input to the numerical design model includes:

- Average reservoir pressure
- Fracture propagation pressure
- Permeability
- Porosity
- Length of the completed interval
- Wellbore radius
- Tubing ID, liner ID, pipe roughness
- Acid properties (type, concentration, density, viscosity)
- Number of segments
- Acid coverage per segment
- Hole size per segment
- Discharge Coefficient

Step 1. Estimate the Pump Rate

The software will then estimate the design pump rate based on the standard transient inflow model (not the Darcy model, which is a steady-state assumption) while ensuring that the injection pressure remains below fracturing pressure. Key parameters include the permeability, the length of the completed interval, and the difference between annulus pressure and reservoir pressure. For the calculation, it is assumed that the skin can be reduced to zero. Thus, note that because the stimulation job typically takes less than 24 hours, the injectivity is higher than predicted by the Darcy formulation. The reason is that the boundaries are not yet felt by the pressure pulse emitted during stimulation. So, even though the flow inside the liner is a steady-state formulation, the inflow model used for design of the pump rate is transient.

Step 2. Estimate Wormholing Characteristics

A nodal analysis calculation must be performed to estimate the downhole temperature at the heel of the liner. Based on the choice of acid system, the permeability, and the temperature, the optimum velocity for wormhole propagation is estimated, together with the anticipated pore volume to breakthrough based on published literature data. The Buijse-Glasbergen model is used to characterise the wormholing at different velocities.

Step 3. Estimate Total Number of Holes and the dP Across Last Hole

Based on the optimum velocity and the calculated design pump rate, it is straightforward to calculate the total cross-sectional area of the holes. This area is linearly correlated with the dP across the last hole, which is a key design parameter.

Step 4. Estimate Acid Coverage

The stimulation design aims for a negative skin of -3 or better, which requires the holes to be not more than 30-40 ft apart. The model by Economides et al. (1994) is used to calculate the acid coverage required to achieve this skin. A higher acid coverage requires more acid and longer pumping time and hence higher cost. This must be weighed against aiming for a more negative skin.

Step 5. Calculate the Optimized Hole Distribution

Provide an initial estimate of the number of holes per segment and let the software find the solution which honours the acid coverage per segment and the dP across the last hole. The initial estimate can be found from the relationship between interstitial velocity, pump rate, and total cross-sectional hole area for a particular discharge coefficient and liner configuration.

Example:

To illustrate the design concept in more detail, an example is shown below. The well in question will have an approximate reservoir length of some 7000 ft. Since a stand (3 drill pipe lengths) is approximately 91 ft, the well is numerically split into 8 segments, each with a length of 910 ft, corresponding to 10 stands.

The initial design coverage is set to 1 bbl/ft. The transient inflow equation predicts that the maximum rate without fracturing the formation is 20 bpm, assuming that the skin is zero. As the stimulation progresses, the rate can be increased further. The resulting pumping time will be 6 hours, which leads to a slight adjustment of the design rate, but not much.

Although the reservoir temperature is 250 F or more, nodal analysis based on the design rate of 20 bpm predicts a BHT of 140 F at the first hole. This temperature is used for estimating the position of the optimum velocity for wormhole propagation based on a measured curve and the Buij se-Glasbergen model.

The final skin is initially assumed to be -3, which yields a maximum distance between adjacent holes of 30 ft. This corresponds to a pressure drop across the last hole of about 30 psia, which is then used as input for the design model.

The discharge coefficient is assumed to be 0.70, which is mid-way between the theoretical minimum of 0.56 and a high value of 0.80. Post-job analysis will help identify the pressure drop across the holes and hence the actual discharge coefficient.

A first estimate of the hole size distribution makes use of a linear relationship between hole cross-section area and pressure drop across the last hole. Based on this initial input, the actual optimum hole size distribution is calculated using the numerical algorithm outlined. In the inner loop, the flow equations are solved. In the outer loop, the number of holes is adjusted to match the pressure drop across the last hole as well as the acid coverage for each segment.

The results from the calculations are show in the four plots above. The distance between adjacent holes is in the range 20-35 ft, which yields optimum stimulation coverage (wormholes cover the entire well length). The distance is not uniform because the hole size is chosen to be constant at 4 mm to avoid complicating the pilot design.

Based on the wormhole growth model of PVbt versus interstitial rate, the minimum PVbt to be inserted into the skin model by Economides and based on the specified acid coverage of 1.0 bbl/ft. This yields a skin factor of -2.5, which is considered close enough to the initial estimate of -3. If a skin of -3 is desired, we would need to increase the acid coverage, recalculate the pumping time, recalculate the flow rate, redesign the hole sizes and then check the resulting skin.

While the embodiment of the invention has been described above and discussed in detail, the invention is not deemed to be restricted to this particular embodiment. A person skilled in the art will appreciate that a number of variations may be made to the described embodiment or features thereof, without departing from the scope of the present invention.

In particular, the invention is not deemed to be limited to use in LEL-liners, as has been described. Other systems involving material flow through conduits and/or material formations may benefit from the implementation of the current invention, and embodiment, as described above. The scope of protection is limited by the appended claims.

<u>References</u>

1. Al-Ghamdi, A.H., Mahmoud, M.A., Wang, G., Hill, A.D., Nasr-El-Din, H.A. (2014). Acid Diversion by Use of Viscoelastic Surfactants: The Effects of Flow Rate and Initial Permeability Contrast. SPE-142564-PA, SPE J. (December 2014), 1203-1216.

2. Bernadiner, M.G., Thompson, K.E., Fogler, H.S. (1992). Effect of Foams used during Carbonate Acidizing. SPE Prod. Eng. (November 1992), 350-356.

3. Buijse, M. and Glasbergen, G. (2005). A Semi-empirical Model to Calculate Wormhole Growth in Carbonate Acidizing. SPE-96892-MS, presented at the SPE Annual Technical Conference and Exhibition, Dallas, Texas, U.S.A, 9-12 October 2005.

4. Crump, J.B. and Conway, M.W. (1988). Effects of Perforation-Entry Friction of Bottom-hole Treating Analysis. SPE 15474, JPT (August 1988), 1041-1048.

5. Dong, K., Jin, X., Zhu, D., Hill, A.D. (2014). The Effect of Core Dimensions on the Optimum Acid Flux in Carbonate Acidizing. SPE-168146-MS, presented at the International Conference and Exhibition on Formation Damage Control, Lafayette, Louisiana, USA, 26-28 February 2014.

6. Dong, K., Jin, X., Zhu, D., Hill, A.D. (2016). Theoretical and Experimental Study on Optimal Injection Rates in Carbonate Acidizing. SPE-178961-MS, presented at the International Conference and Exhibition on Formation Damage Control, Lafayette, Louisiana, USA, 24-26 February 2016.

7. Dubetz, D., Cheng, H., Zhu, D., Hill, A.D. (2016). Characterization of Rock Pore-Size Distribution and Its Effects on Wormhole Propagation. SPE-181725-MS, presented at the SPE Annual Technical Conference and Exhibition, Dubai, UAE, 26-28 September 2016.

8. Economides, M.J., Hill, A.D., Ehlig-Economides, C.A. (1994). Petroleum Production Systems, Prentice-Hall, New York, NY.

9. El-Rabba, A.M., Shah, S.N., Lord, D.L. (1997). New Perforation Pressure-Loss Correlations for Limited-Entry Fracturing Treatments. SPE-54533-PA, SPE Prod. & Facilities 14(1).

10. Etten, J., Zhu, D., Hill, A.D. (2015). The Combined Effect of Permeability and Pore Structure on Carbonate Matrix Acidizing. SPE-174314-MS, presented at EUROPEC 2015, Madrid, Spain, 1-4 June 2015.

11. Fernandes, P.D., da Silva, M.G.F., Bedrikovetsky, P. (2006). A New IOR Technology to Homogenize Horizontal Well Injectivity/Productivity Profile. SPE-99343-MS, presented at the SPE/DOE Symposium on Improved Oil Recovery, Tulsa, Oklahoma, USA, 22-26 April 2006.

12. Fredd, C.N., Fogler, H.S. (1996). Alternative Stimulation Fluids and Their Impact on Carbonate Acidizing. SPE-31074-PA, SPE J. (March 1998), 34-41.

13. Fredd, C.N., Tjia, R., Fogler, H.S. (1997). The Existence of an Optimum Damköhler Number for Matrix Stimulation of Carbonate Formations. SPE-38167-MS, presented at the SPE European Formation Damage Conference, The Hague, The Netherlands, 2-3 June 1997.

14. Fredd, C.N., Fogler, H.S. (1997). Chelating Agents as Effective Matrix Stimulation Fluids for Carbonate Formations. SPE-37212-MS, SPE-38167-MS, presented at the SPE International Symposium on Oilfield Chemistry, Houston, Texas, USA, 18-21 February 1997.

15. Fredd, C.N., Fogler, H.S. (1999). Optimum Conditions for Wormhole Formation in Carbonate Porous Media: Influence of Transport and Reaction. SPE-56995-PA, SPE J. 4(3), 196-205.

16. Furui, K., Zhu, D., Hill, A.D. (2005). A Comprehensive Skin Factor Model of Horizontal Well Completion Performance. SPE-84401-PA, SPE Production & Facilities (August 2005), 207-220.

17. Furui, K., Zhu, D., Hill, A.D. (2008). A New Skin Factor Model for Perforated Horizontal Wells. SPE-77363-PA, SPE Drilling & Completion (September 2008), 205-215

18. Furui, K., Burton, R.C., Burkhead, D.W., Abdelmalek, N.A., Hill, A.D., Zhu, D. and Nozaki, M. (2010). A Comprehensive Model of High-Rate Matrix-Acid Stimulation for Long Horizontal Wells in Carbonate Reservoirs: Part I - Scaling Up Core-Level Acid Wormholing to Field Treatments. SPE-134265-PA, presented at presented at the SPE Annual Technical Conference and Exhibition, Florence, Italy, 19-22 September 2010.

19. Furui, K., Burton, R.C., Burkhead, D.W., Abdelmalek, N.A., Hill, A.D., Zhu, D. and Nozaki, M. (2010). A Comprehensive Model of High-Rate Matrix-Acid Stimulation for Long Horizontal Wells in Carbonate Reservoirs: Part II - Wellbore/Reservoir Coupled Flow Modeling and Field Application. SPE-155497-PA, presented at the SPE Annual Technical Conference and Exhibition, Florence, Italy, 19-22 September 2010.

20. Gdanski, R.D., Norman, L.R. (1986). Using the Hollow-Core Test to Determine Acid Reaction Rates. SPE-12151-PA, SPE Prod. Eng. (March 1986), 111-117.

21. Gdanski, R., van Domelen, M.S. (1999). Slaying the Myth of Infinite Reactivity of Carbonates. SPE-50730-MS, presented at the International Symposium on Oilfield Chemistry, Houston, Texas, 16-19 February 1999.

22. Gdanski, R. (1999). A Fundamentally New Model of Acid Wormholing in Carbonates. SPE-54719-MS, presented at the European Formation Damage Conference, The Hague, The Netherlands, 31 May-1 June 1999

23. Hansen, J.H. (2001). A method of stimulating a well. EP1184537B1, filed 31-aug-2001.

24. Hansen, J.H. and Nederveen, N. (2002). Controlled Acid Jet (CAJ) Technique for Effective Single Operation Stimulation of 14,000+ ft Long Reservoir Sections. SPE-78318-MS, presented at the SPE 13th European Petroleum Conference, Aberdeen, Scotland, U.K., 29-31 October 2002.

25. Hansen, J.H., Mogensen, K. (2012). Flow Simulation in a Well or Pipe. US8321190B2, PCT filed 24-May-2006.

26. Hashim, A.M., Stemberger, D.J., Mulrooney, M. (2013). Novel Technology for Downhole Reality Check and Realization - A Case Study of Real-Time Monitoring of High-Rate Matrix Acid Stimulation Treatments in a Tight Chalk Reservoir using Distributed Temperature Sensing. SPE-167420-MS, presented at the SPE Middle East Intelligent Energy Conference and Exhibition, Dubai, UAE, 28-30 October 2013.

27. Hoefner, M.L., Fogler, H.S., Stenius, P., Sjöblom, J. (1987). Role of Acid Diffusion in Matrix Acidizing of Carbonates. SPE-13564-PA, JPT (February 1987), 203-208.

28. Hoefner, M.L., Fogler, H.S. (1989). Fluid Velocity and Reaction Rate Effects during Carbonate Acidizing: Application of Network Model. SPE Prod. Eng. (February 1989), 56-62.

29. Issa, F., Abbott, J., Akbari, A. (2014). Production Optimization of Maximum Reservoir Contact Well by Utilizing Acid Stimulation with Limited Entry Technique. SPE-171779-MS, presented at the Abu Dhabi International Exhibition and Conference, Abu Dhabi, UAE, 10-13 November 2014.

30. Izgec, O., Keys, R., Zhu, D., Hill, A.D. (2008). An Integrated Theoretical and Experimental Study on the Effects of Multiscale Heterogeneities in Matrix Acidizing of Carbonates. SPE-115143-MS, presented at the SPE Annual Technical Conference and Exhibition, Denver, Colorado, 21-24 September 2008.

31. Lagrone, K.W. and Rasmussen, J.W. (1963). A New Development in Completion Methods - The Limited Entry Technique. SPE-530, presented at the SPE Rocky Mountains Regional Meeting, Denver, Colorado, U.S.A., 27-28 May 1963.

32. McDuff, D.R., Shuhart, C.E., Jackson, S.K., Postl, D., Brown, J.S. (2010). Understanding Wormholes in Carbonates: Unprecedented Experimental Scale and 3-D Visualization. SPE-134379-MS, presented at the SPE Annual Technical Conference and Exhibition, Florence, Italy, 19-22 September 2010.

33. McLemore, A.J., Tyner, J.S., Yoder, D.C., Buchanan, J.R. (2013). Discharge Coefficients for Orifices Cut into Round Pipes. J. Irrig. Drain Eng. 139, 947-954.

34. Mitchell, D., Davis, J., Appleton, J., Watson, M. (2014). First Successful Application of Horizontal Open Hole Multistage Completion Systems in Turkey's Selmo Field. SPE-170777-MS, presented at the SPE Annual Technical Conference and Exhibition, Amsterdam, The Netherlands, 27-29 October 2014.

35. Mogensen, K., Hansen, J.H. (2007). A Dynamic Model for High-Rate Acid Stimulation of Very Long Horizontal Wells. SPE-110135-MS, presented at the SPE Annual Technical Conference and Exhibition, Anaheim, California, USA, 11-14 November 2007.

36. Ndonhong, V., Belostrino, E., Zhu, D., Hill, A.D., Beckham, R.E., Shuchart, C.E. (2016). The Impact of Rock Properties on Acid Jetting in Carbonate Rocks: An Experimental Study. SPE-180113, presented at 78th EAGE Conference and Exhibition, Vienna, Austria, 30 May - 2 June 2016.

37. Ndonhong, V., Zhu, D., Hill, A.D. (2018). Acid Jetting on Carbonate Rocks: A Computational Fluid Dynamics Study at Laboratory Scale. SPE-190849-MS, presented at 80th EAGE Conference and Exhibition, Copenhagen, Denmark, 11-14 June 2018.

38. Punnapala, S., Rahman, M.A., Misra, S. (2014). Challenge of Acidizing Horizontal Wells in Tight Carbonate Reservoirs - Weak Acid and Non-Acid Alternates. SPE-171766-MS, presented at the Abu Dhabi International Exhibition and Conference, Abu Dhabi, UAE, 10-13 November 2014.

39. Rodrigues, V.D. Neumann, L.F., Torres, D., Guimarães, C., Torres, R.S. (2007). Horizontal Well Completion and Stimulation Techniques - A review with Emphasis on Low-Permeability Carbonates. SPE-108075-MS, presented at the SPE Latin American and Caribbean Petroleum Engineering Conference, Buenos Aires, Argentina, 15-18 April 2007.

40. Sasongko, H., Zhu, S., Hill, A.D. (2011). Acid Placement in Acid Jetting Treatments in Long Horizontal Wells. SPE-144200, presented at the SPE European Formation Damage Conference, Noordwijk, The Netherlands, 7-10 June 2011.

41. Sau, R., Grubert, M. (2014). Advanced Completion and Stimulation Design Model for Maximum Reservoir Contact Wells. SPE-171800-MS, presented at the Abu Dhabi International Exhibition and Conference, Abu Dhabi, UAE, 10-13 November 2014.

42. Schwalbert, M.P., Zhu, D., Hill, A.D. (2018). Skin Factor Equations for Anisotropic Wormhole Networks and Limited Entry Completions. SPE-189486-MS, presented at the International Conference and Exhibition on Formation Damage Control, Lafayette, Louisiana, USA, 7-9 February 2018.

43. Shirley, R.M., Zhu, D., Hill, A.D., Da Motta, E.P. (2017). Maximizing the Value of Matrix Acidizing Treatments in Carbonate Reservoirs. SPE-185812-MS, presented at the 79th EAGE Conference and Exhibition, Paris, France, 12-15 June 2017.

44. Shokry, A.F. (2010). Acid Stimulation Results of Arab Carbonate Reservoirs in Offshore Field, UAE: 10 Years of Review, How to Prepare the Future Challenges Linked to Stimulation. SPE-138357-MS, presented at the Abu Dhabi International Exhibition and Conference, Abu Dhabi, UAE, 1-4 November 2010.

45. Shukla, S., Zhu, D., Hill, A.D. (2006). The Effect of Phase Saturation Conditions on Wormhole Propagation in Carbonate Acidizing. SPE-82273-PA, SPE J. (September 2006), 273-281.

46. Troshko, A.A., Brown III, J.S., Shuchart, C.E. (2015). Fluid Stimulation of Long Well Intervals. US2015/0041123A1, filed 4-Oct-2012.

47. Van Domelen, M., Talib, N., Glasbergen, G. (2011). Return to Basics and Proper Planning Opens the Possibility to Acid Stimulate a Difficult Chalk Formation. SPE-144159-MS, presented at the SPE European Formation Damage Conference, Noordwijk, The Netherlands, 7-10 June 2011.

48. Van Domelen, M., Abd Hammoud, M., Glasbergen, G., Talib, N. (2012). Optimization of Limited Entry Matrix Acid Stimulations with Laboratory Testing and Treatment Pressure Matching. SPE-157429-MS, presented at the SPE International Production and Operations Conference and Exhibition, Doha, Qatar, 14-16 May 2012.

49. Virk, P.S. (1971). Drag Reduction in Rough Pipes. J. Fluid Mech. 45, 225-246.

50. Virk, P.S. (1975). Drag Reduction Fundamentals. AIChE J. 21, 625-656

**Claims**

1. A method, performed by a data-processing system, of simulating fluid transport in a system for stimulating a well in a material formation (18), which system comprises a limited entry liner, LEL, (20), wherein the liner (20) is divided into segments (36), each of which having a length less than that of the total length of the liner, and which includes one or more holes (28) along a wall of the liner for discharging a fluid into the formation, **characterized in that**

   the method provides (1004) an initial estimate of the number of holes along the wall of the liner which honours the acid coverage per segment and the drop in pressure across the last hole, for an optimized hole-size distribution in construction and operation of the system,

adjusting (1024) the initial estimate of the number of holes along the wall of the liner if the acid coverage per segment and the drop in pressure across the last hole is not honoured; and wherein the method further comprises:

performing a series of algebraic equations for an initial hole-size distribution guess;
calculating acid coverage and dp across the last hole;
comparing acid coverage and dp across the last hole against a design variable in a first iteration;
evenly decreasing the number of holes across a segment for a next iteration until dp across the last hole is honoured; or
evenly increasing the number of holes across a segment for a next iteration until dp across the last hole is honoured, as a first step; and
performing a second step which includes:

redistributing existing number of holes between various segments as a first iteration, wherein segments, where the calculated acid coverage is the furthest away from design values, exchange one hole;
performing the next iteration until acid coverage is honoured; and performing the first step and the second step until dp across the last hole and acid coverage is honoured; and
wherein the method further comprises:
operating the system for stimulating the well in the material formation (18) using the optimized hole-size distribution.

2. A method according to claim 1, wherein the method comprises:

running a simulation once the dp across the last hole and acid coverage is honoured to determine a wellhead pressure;
adjusting a friction reducer and
re-running the simulation if the wellhead pressure exceeds a maximum pressure rating; and/or
increasing a tubing ID in presence of existing friction reducer; and/or
reducing a pump rate, such that the wellhead pressure rating is maintained below a maximum pressure rating.

3. A method according to claim 1, wherein the method comprises:

running a simulation to determine whether a distance between LEL holes does not exceed twice an expected final wormhole radius;
increasing a LEL hole size by 1 mm if the distance between LEL holes is too small, and
repeating the simulation; or
decreasing the LEL hole size by 1 mm if the distance between the LEL is too large, and
repeating the simulation; or
proceeding with an output of results if the LEL holes is dose or equal to twice the wormhole radius.

4. A method according to claim 1, wherein the following constraints are honoured:

annulus pressure exceeding minimum reservoir pressure to avoid cross-flow inside wellbore;
annulus pressure does not exceed fracturing pressure to avoid fracturing;
wellhead pressure does not exceed maximum design pressure rating;
cross-sectional area of all LEL holes combined may be equal to or exceed a minimum cross-sectional area to avoid creating an additional pressure drop during normal production or injection of the well after stimulation;
average distance between two neighbouring LEL holes may be equal twice the wormhole radius; and
liner ID not exceeding a wellbore size, are honoured.

5. A method according to claim 1, wherein the method comprises:

describing a first order non-linear boundary value problem consisting of two first-order coupled non-linear differential equations with boundary conditions at each end of an interval of the independent variable, coupled with a set of algebraic equations,
wherein polynomial approximation is used to solve the numerical model.

6. A method according to claim 1, wherein the fluid transport is a fluid transport in a LEL-liner.

7. A method according to claim 1, wherein the simulation is performed in discrete steps, each step required to be completed before a following step may take place.

8. A method according to any one of claims 1 through 7 wherein a data processing system is configured to perform the steps of the method.

9. A data processing system configured to perform the steps of the method as described in any one claims 1 to 8 for stimulating a well.

10. The data processing system as claimed in claim 9 which includes any electronic system or device having a processor configured to perform the step of the method,
and to communicate an outcome of those steps to a user of the system or device, which system or device includes, but is not limited to, a computer, a laptop, a handheld electronic device, or electronic workstation.

11. A computer program comprising instructions, which when executed by a computer, causing the computer to perform the method according to claims 1 to 8.

**Patentansprüche**

1. Verfahren, das von einem Datenverarbeitungssystem durchgeführt wird, zum Simulieren von Fluidtransport in einem System zum Stimulieren eines Bohrlochs in einer Materialformation (18), wobei das System eine Auskleidung mit begrenztem Eintritt, LEL, (20) umfasst, wobei die Auskleidung (20) in Segmente (36) unterteilt ist, von denen jedes eine Länge aufweist, die kleiner als die der Gesamtlänge der Auskleidung ist, und die ein oder mehrere Löcher (28) entlang einer Wand der Auskleidung zum Abgeben eines Fluids in die Formation beinhaltet, **dadurch gekennzeichnet, dass**

das Verfahren eine anfängliche Schätzung der Anzahl von Löchern entlang der Wand der Auskleidung bereitstellt (1004), die die Säureabdeckung pro Segment und den Druckabfall über das letzte Loch für eine optimierte Lochgrößenverteilung bei Konstruktion und Betrieb des Systems berücksichtigt,
Anpassen (1024) der anfänglichen Schätzung der Anzahl von Löchern entlang der Wand der Auskleidung, wenn die Säureabdeckung pro Segment und der Druckabfall über das letzte Loch nicht berücksichtigt werden; und wobei das Verfahren ferner umfasst:

Durchführen einer Reihe algebraischer Gleichungen für eine anfängliche Lochgrößenverteilungsschätzung;
Berechnen von Säureabdeckung und dp über das letzte Loch;
Vergleichen von Säureabdeckung und dp über das letzte Loch mit einer Designvariablen in einer ersten Iteration;
gleichmäßiges Verringern der Anzahl von Löchern über ein Segment für eine nächste Iteration, bis dp über das letzte Loch berücksichtigt wird; oder
gleichmäßiges Erhöhen der Anzahl von Löchern über ein Segment für eine nächste Iteration, bis dp über das letzte Loch berücksichtigt wird, als einen ersten Schritt; und
Durchführen eines zweiten Schritts, der beinhaltet:

Umverteilen der vorhandenen Anzahl von Löchern zwischen verschiedenen Segmenten als eine erste Iteration, wobei Segmente, bei denen die berechnete Säureabdeckung am weitesten von Designwerten entfernt ist, ein Loch austauschen;
Durchführen der nächsten Iteration, bis Säureabdeckung berücksichtigt wird; und
Durchführen des ersten Schritts und des zweiten Schritts, bis dp über das letzte Loch und Säureabdeckung berücksichtigt wird; und
wobei das Verfahren ferner umfasst:
Betreiben des Systems zum Stimulieren des Bohrlochs in der Materialformation (18) unter Verwendung der optimierten Lochgrößenverteilung.

2. Verfahren nach Anspruch 1, wobei das Verfahren umfasst:

Ausführen einer Simulation, sobald dp über das letzte Loch und Säureabdeckung berücksichtigt werden, um einen Bohrlochkopfdruck zu bestimmen;

Anpassen eines Reibungsreduzierers und

erneutes Ausführen der Simulation, wenn der Bohrlochkopfdruck einen maximalen Nenndruck überschreitet; und/oder

Erhöhen einer Rohr-ID in Gegenwart eines vorhandenen Reibungsreduzierers; und/oder

Reduzieren einer Pumprate, so dass der Bohrlochkopfnenndruck unter einem maximalen Nenndruck gehalten wird.

3. Verfahren nach Anspruch 1, wobei das Verfahren umfasst:

Ausführen einer Simulation, um zu bestimmen, ob ein Abstand zwischen LEL-Löchern das Doppelte eines erwarteten endgültigen Wurmlochradius nicht überschreitet;

Erhöhen einer LEL-Lochgröße um 1 mm, wenn der Abstand zwischen LEL-Löchern zu klein ist, und Wiederholen der Simulation; oder

Verringern der LEL-Lochgröße um 1 mm, wenn der Abstand zwischen den LEL zu groß ist, und Wiederholen der Simulation; oder

Fortfahren mit einer Ausgabe von Ergebnissen, wenn die LEL-Löcher dosiert oder gleich dem Doppelten des Wurmlochradius sind.

4. Verfahren nach Anspruch 1, wobei die folgenden Beschränkungen berücksichtigt werden:

Ringraumdruck, der den minimalen Reservoirdruck überschreitet, um Querströmung im Bohrloch zu vermeiden;

Ringraumdruck, der den Frakturierungsdruck nicht überschreitet, um Frakturierung zu vermeiden;

Bohrlochkopfdruck, der den maximalen Designdrucknenndruck nicht überschreitet;

Querschnittsfläche aller kombinierten LEL-Löcher kann gleich einer minimalen Querschnittsfläche sein oder diese überschreiten, um zu vermeiden, dass ein zusätzlicher Druckabfall während der normalen Produktion oder Injektion des Bohrlochs nach der Stimulation erzeugt wird;

durchschnittlicher Abstand zwischen zwei benachbarten LEL-Löchern kann gleich dem Doppelten des Wurmlochradius sein; und

Liner-ID, die eine Bohrlochgröße nicht überschreitet, werden berücksichtigt.

5. Verfahren nach Anspruch 1, wobei das Verfahren umfasst:

Beschreiben eines nichtlinearen Grenzwertproblems erster Ordnung, das aus zwei gekoppelten nichtlinearen Differentialgleichungen erster Ordnung mit Randbedingungen an jedem Ende eines Intervalls der unabhängigen Variablen besteht, gekoppelt mit einem Satz algebraischer Gleichungen,

wobei polynomiale Approximation verwendet wird, um das numerische Modell zu lösen.

6. Verfahren nach Anspruch 1, wobei der Fluidtransport ein Fluidtransport in einem LEL-Liner ist.

7. Verfahren nach Anspruch 1, wobei die Simulation in diskreten Schritten durchgeführt wird, wobei jeder Schritt abgeschlossen werden muss, bevor ein folgender Schritt stattfinden kann.

8. Verfahren nach einem der Ansprüche 1 bis 7, wobei ein Datenverarbeitungssystem konfiguriert ist, um die Schritte des Verfahrens durchzuführen.

9. Datenverarbeitungssystem, das konfiguriert ist, um die Schritte des Verfahrens, wie in einem der Ansprüche 1 bis 8 beschrieben, zum Stimulieren eines Bohrlochs durchzuführen.

10. Datenverarbeitungssystem nach Anspruch 9, das ein beliebiges elektronisches System oder eine beliebige elektronische Vorrichtung beinhaltet, das bzw. die einen Prozessor aufweist, der konfiguriert ist, um den Schritt des Verfahrens durchzuführen,

und um ein Ergebnis dieser Schritte an einen Benutzer des Systems oder der Vorrichtung zu kommunizieren, wobei das System oder die Vorrichtung einen Computer, einen Laptop, eine handgehaltene elektronische Vorrichtung oder eine elektronische Workstation beinhaltet, aber nicht darauf beschränkt ist.

11. Computerprogramm, das Anweisungen umfasst, die, wenn sie von einem Computer ausgeführt werden, den Computer veranlassen, das Verfahren nach den Ansprüchen 1 bis 8 durchzuführen.

**Revendications**

1. Un procédé, mis en oeuvre par un système de traitement de données, de simulation d'un transport de fluide dans un système pour stimuler un puits dans une formation de matériau (18), système qui comprend un chemisage à limitation d'entrée, LEL, (20), le chemisage (20) étant divisé en segments (36) dont chacun a une longueur inférieure à celle de la longueur totale du chemisage, et qui comprend un ou plusieurs orifices (28) le long d'une paroi du chemisage pour déverser un fluide dans la formation, **caractérisé en ce que**

   le procédé donne (1004) une estimation initiale du nombre d'orifices le long de la paroi du chemisage, qui soit conforme à la répartition d'acide par segment et à la chute de pression de part et d'autre du dernier orifice pour une distribution optimisée des dimensions d'orifice à la construction et en fonctionnement du système,
   l'ajustement (1024) de l'estimation initiale du nombre d'orifices le long de la paroi du chemisage, si la répartition d'acide par segment et la chute de pression de part et d'autre du dernier orifice ne sont pas conformes ; et dans lequel le procédé comprend en outre :

      l'exécution d'une série d'équations algébriques pour supputer une distribution initiale des dimensions des orifices ;
      le calcul de la répartition d'acide et de la chute de pression de part et d'autre du dernier orifice ;
      la comparaison de la répartition d'acide et de la chute de pression de part et d'autre du dernier orifice par rapport à une variable de conception, dans une première itération ;
      la diminution uniforme du nombre d'orifices sur l'étendue d'un segment pendant une itération suivante jusqu'à ce que la chute de pression de part et d'autre du dernier orifice soit conforme ; ou
      l'augmentation uniforme du nombre d'orifices sur l'étendue d'un segment pendant une itération suivante jusqu'à ce que la chute de pression de part et d'autre du dernier orifice soit conforme, en tant que première étape ; et
      l'exécution d'une seconde étape qui comprend :

         la redistribution du nombre existant d'orifices entre divers segments en tant que première itération, dans laquelle les segments dont la répartition d'acide calculée est la plus éloignée des valeurs de conception échangent un orifice ;
         l'exécution de l'itération suivante jusqu'à ce que la répartition d'acide soit conforme ; et l'exécution de la première étape et de la seconde étape jusqu'à ce que la chute de pression de part et d'autre du dernier orifice et la répartition d'acide soient conformes ; et
         dans lequel le procédé comprend en outre :
         la mise en oeuvre du système de stimulation du puits dans la formation de matériau (18) à l'aide de la distribution optimisée des dimensions des orifices.

2. Un procédé selon la revendication 1, dans lequel le procédé comprend :

   l'exécution d'une simulation une fois que la chute de pression de part et d'autre du dernier orifice et la répartition d'acide sont conformes, pour déterminer une pression de tête de puits ;
   l'ajustement d'un réducteur de frottement ; et
   l'exécution à nouveau de la simulation si la pression de tête de puits dépasse une pression maximale nominale ; et/ou
   l'augmentation d'un diamètre interne de tube de production en présence d'un réducteur de frottement existant ; et/ou
   la réduction d'un débit de pompe, de telle sorte que la pression de tête de puits nominale soit maintenue au-dessous d'une pression nominale maximale.

3. Un procédé selon la revendication 1, dans lequel le procédé comprend :

   l'exécution d'une simulation pour déterminer si une distance entre les orifices LEL ne dépasse pas ou dépasse deux fois un rayon final attendu de wormhole ;
   l'augmentation d'une dimension d'orifice LEL de 1 mm si la distance entre les orifices LEL est trop faible, et la répétition de la simulation ; ou

la diminution de la dimension d'orifice LEL de 1 mm si la distance entre les LEL est trop grande, et

la répétition de la simulation ; ou

le passage à une délivrance de résultats en sortie si les orifices LEL sont proches de, ou égaux à, deux fois le rayon de wormhole.

**4.** Un procédé selon la revendication 1, dans lequel les contraintes suivantes sont rendues conformes :

la pression annulaire qui dépasse une pression minimale de réservoir, pour éviter un écoulement transversal à l'intérieur du forage ;

la pression annulaire qui ne dépasse pas une pression de fracturation, pour éviter la fracturation ;

la pression de tête de puits qui ne dépasse pas une pression nominale maximale de conception ;

l'aire en section droite de tous les orifices LEL combinés qui peut égaler ou dépasser une surface minimale en section droite, pour éviter la création d'une chute de pression supplémentaire en production normale ou à l'injection du puits après stimulation ;

la distance moyenne entre deux orifices LEL voisins qui peut égaler deux fois le rayon de wormhole ; et

le diamètre interne de chemisage qui ne dépasse pas une dimension de forage.

**5.** Un procédé selon la revendication 1, dans lequel le procédé comprend :

la description d'un problème de valeurs aux limites non linéaire du premier ordre constitué de deux équations différentielles couplées du premier ordre non linéaires avec des conditions aux limites à chaque extrémité d'un intervalle de la variable indépendante, couplées à un jeu d'équations algébriques,

dans lequel une approximation polynomiale est utilisée pour résoudre le modèle numérique.

**6.** Un procédé selon la revendication 1, dans lequel le transport de fluide est un transport de fluide dans un chemisage LEL.

**7.** Un procédé selon la revendication 1, dans lequel la simulation est effectuée par pas discrets, chaque pas nécessitant d'être achevé avant qu'un pas suivant puisse avoir lieu.

**8.** Un procédé selon l'une des revendications 1 à 7, dans lequel un système de traitement de données est configuré pour mettre en oeuvre les étapes du procédé.

**9.** Un système de traitement de données configuré pour mettre en oeuvre les étapes du procédé tel que décrit dans l'une des revendications 1 à 8, pour la stimulation d'un puits.

**10.** Le système de traitement de données tel que revendiqué dans la revendication 9, qui comprend tout système ou dispositif électronique avec un processeur configuré pour mettre en oeuvre les étapes du procédé et pour communiquer un résultat de ces étapes à un utilisateur du système ou du dispositif, le système ou dispositif comprenant, mais de façon non limitative, un calculateur, un ordinateur portable, un dispositif électronique tenant dans la main, ou une station de travail électronique.

**11.** Un programme informatique comprenant des instructions qui, lorsqu'elles sont exécutées par un calculateur, font en sorte que le calculateur mette en oeuvre le procédé selon l'une des revendications 1 à 8.

FIG. 1

FIG. 2

FIG. 3

FIG. 4

FIG. 5

FIG. 6

FIG. 7

FIG. 8

FIG. 9

FIG. 10

FIG. 11

FIG. 12

FIG. 13

FIG. 14

FIG. 15

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- EP 1184537 B1
- US 8321190 B2
- US 2016245049 A1
- US 8321190 W, Hansen, J.H., Mogensen, K.
- US 20150041123 A1, Troshko, A.A., Brown III, J.S., Shuchart, C.E.

### Non-patent literature cited in the description

- **AL-GHAMDI, A.H.** ; **MAHMOUD, M.A.** ; **WANG, G.** ; **HILL, A.D.** ; **NASR-EL-DIN, H.A.** Acid Diversion by Use of Viscoelastic Surfactants: The Effects of Flow Rate and Initial Permeability Contrast.. *SPE-142564-PA, SPE J.*, December 2014, 1203-1216
- **BERNADINER, M.G.** ; **THOMPSON, K.E.** ; **FOGLER, H.S.** Effect of Foams used during Carbonate Acidizing.. *SPE Prod. Eng.*, November 1992, 350-356
- **BUIJSE, M.** ; **GLASBERGEN, G.** A Semi-empirical Model to Calculate Wormhole Growth in Carbonate Acidizing.. *SPE-96892-MS, presented at the SPE Annual Technical Conference and Exhibition, Dallas, Texas, U.S.A, 9-12 October 2005.*, 09 October 2005
- **CRUMP, J.B.** ; **CONWAY, M.W.** Effects of Perforation-Entry Friction of Bottom-hole Treating Analysis.. *SPE 15474, JPT*, August 1988, 1041-1048
- **DONG, K.** ; **JIN, X.** ; **ZHU, D.** ; **HILL, A.D.** The Effect of Core Dimensions on the Optimum Acid Flux in Carbonate Acidizing. *SPE-168146-MS, presented at the International Conference and Exhibition on Formation Damage Control, Lafayette, Louisiana, USA, 26-28 February 2014.*, 26 February 2014
- **DONG, K.** ; **JIN, X.** ; **ZHU, D.** ; **HILL, A.D.** Theoretical and Experimental Study on Optimal Injection Rates in Carbonate Acidizing.. *SPE-178961-MS, presented at the International Conference and Exhibition on Formation Damage Control, Lafayette, Louisiana, USA, 24-26 February 2016.*, 2016
- **DUBETZ, D.** ; **CHENG, H.** ; **ZHU, D.** ; **HILL, A.D.** Characterization of Rock Pore-Size Distribution and Its Effects on Wormhole Propagation.. *SPE-181725-MS, presented at the SPE Annual Technical Conference and Exhibition, Dubai, UAE, 26-28 September 2016.*, 2016
- **ECONOMIDES, M.J.** ; **HILL, A.D.** ; **EHLIG-ECONOMIDES, C.A.** Petroleum Production Systems. Prentice-Hall, 1994
- **EL-RABBA, A.M.** ; **SHAH, S.N.** ; **LORD, D.L.** New Perforation Pressure-Loss Correlations for Limited-Entry Fracturing Treatments.. *SPE-54533-PA, SPE Prod. & Facilities*, 1997, vol. 14 (1)
- **ETTEN, J.** ; **ZHU, D.** ; **HILL, A.D.** The Combined Effect of Permeability and Pore Structure on Carbonate Matrix Acidizing.. *SPE-174314-MS, presented at EUROPEC 2015, Madrid, Spain, 1-4 June 2015.*, 01 June 2015
- **FERNANDES, P.D.** ; **DA SILVA, M.G.F.** ; **BEDRIKOVETSKY, P**. A New IOR Technology to Homogenize Horizontal Well Injectivity/Productivity Profile.. *SPE-99343-MS, presented at the SPE/DOE Symposium on Improved Oil Recovery, Tulsa, Oklahoma, USA, 22-26 April 2006.*, 22 April 2006
- **FREDD, C.N.** ; **FOGLER, H.S.** Alternative Stimulation Fluids and Their Impact on Carbonate Acidizing.. *SPE-31074-PA, SPE J.*, 1996, 34-41
- **FREDD, C.N.** ; **TJIA, R.** ; **FOGLER, H.S.** The Existence of an Optimum Damköhler Number for Matrix Stimulation of Carbonate Formations. *SPE-38167-MS, presented at the SPE European Formation Damage Conference, The Hague, The Netherlands, 2-3 June 1997.*, 03 June 1997
- **FREDD, C.N.** ; **FOGLER, H.S.** Chelating Agents as Effective Matrix Stimulation Fluids for Carbonate Formations.. *SPE-37212-MS, SPE-38167-MS, presented at the SPE International Symposium on Oilfield Chemistry, Houston, Texas, USA, 18-21 February 1997.*, 18 February 1997
- **FREDD, C.N.** ; **FOGLER, H.S.** Optimum Conditions for Wormhole Formation in Carbonate Porous Media: Influence of Transport and Reaction.. *SPE-56995-PA, SPE J.*, 1999, vol. 4 (3), 196-205
- **FURUI, K.** ; **ZHU, D.** ; **HILL, A.D.** A Comprehensive Skin Factor Model of Horizontal Well Completion Performance.. *SPE-84401-PA, SPE Production & Facilities*, August 2005, 207-220

- **FURUI, K.** ; **ZHU, D.** ; **HILL, A.D.** A New Skin Factor Model for Perforated Horizontal Wells.. *SPE-77363-PA, SPE Drilling & Completion*, September 2008, 205-215
- **FURUI, K.** ; **BURTON, R.C.** ; **BURKHEAD, D.W.** ; **ABDELMALEK, N.A.** ; **HILL, A.D.** ; **ZHU, D.** ; **NOZAKI, M.** A Comprehensive Model of High-Rate Matrix-Acid Stimulation for Long Horizontal Wells in Carbonate Reservoirs: Part I - Scaling Up Core-Level Acid Wormholing to Field Treatments.. *SPE-134265-PA, presented at presented at the SPE Annual Technical Conference and Exhibition, Florence, Italy, 19-22 September 2010.*, 2010
- **FURUI, K.** ; **BURTON, R.C.** ; **BURKHEAD, D.W.** ; **ABDELMALEK, N.A.** ; **HILL, A.D.** ; **ZHU, D.** ; **NOZAKI, M.** A Comprehensive Model of High-Rate Matrix-Acid Stimulation for Long Horizontal Wells in Carbonate Reservoirs: Part II - Wellbore/Reservoir Coupled Flow Modeling and Field Application.. *SPE-155497-PA, presented at the SPE Annual Technical Conference and Exhibition, Florence, Italy, 19-22 September 2010.*, 2010
- **GDANSKI, R.D.** ; **NORMAN, L.R.** Using the Hollow-Core Test to Determine Acid Reaction Rates.. *SPE-12151-PA, SPE Prod. Eng.*, March 1986, 111-117
- **GDANSKI, R.** ; **VAN DOMELEN, M.S.** Slaying the Myth of Infinite Reactivity of Carbonates.. *SPE-50730-MS, presented at the International Symposium on Oilfield Chemistry, Houston, Texas, 16-19 February 1999.*, 1999
- **GDANSKI, R.** A Fundamentally New Model of Acid Wormholing in Carbonates.. *SPE-54719-MS, presented at the European Formation Damage Conference, The Hague, The Netherlands, 31 May-1 June 1999*, 1999
- **HANSEN, J.H.** ; **NEDERVEEN, N.** Controlled Acid Jet (CAJ) Technique for Effective Single Operation Stimulation of 14,000+ ft Long Reservoir Sections.. *SPE-78318-MS, presented at the SPE 13th European Petroleum Conference, Aberdeen, Scotland, U.K., 29-31 October 2002.*, 2002
- **HASHIM, A.M.** ; **STEMBERGER, D.J.** ; **MULROONEY, M.** Novel Technology for Downhole Reality Check and Realization - A Case Study of Real-Time Monitoring of High-Rate Matrix Acid Stimulation Treatments in a Tight Chalk Reservoir using Distributed Temperature Sensing.. *SPE-167420-MS, presented at the SPE Middle East Intelligent Energy Conference and Exhibition, Dubai, UAE, 28-30 October 2013.*, 28 October 2013
- **HOEFNER, M.L.** ; **FOGLER, H.S.** ; **STENIUS, P.** ; **SJÖBLOM, J.** Role of Acid Diffusion in Matrix Acidizing of Carbonates.. *SPE-13564-PA, JPT*, February 1987, 203-208

- **HOEFNER, M.L.** ; **FOGLER, H.S.** Fluid Velocity and Reaction Rate Effects during Carbonate Acidizing: Application of Network Model.. *SPE Prod. Eng.*, February 1989, 56-62
- **ISSA, F.** ; **ABBOTT, J.** ; **AKBARI, A.** Production Optimization of Maximum Reservoir Contact Well by Utilizing Acid Stimulation with Limited Entry Technique.. *SPE-171779-MS, presented at the Abu Dhabi International Exhibition and Conference, Abu Dhabi, UAE, 10-13 November 2014.*, 2014
- **IZGEC, O.** ; **KEYS, R.** ; **ZHU, D.** ; **HILL, A.D.** An Integrated Theoretical and Experimental Study on the Effects of Multiscale Heterogeneities in Matrix Acidizing of Carbonates.. *SPE-115143-MS, presented at the SPE Annual Technical Conference and Exhibition, Denver, Colorado, 21-24 September 2008.*, 21 September 2008
- **LAGRONE, K.W.** ; **RASMUSSEN, J.W.** A New Development in Completion Methods - The Limited Entry Technique.. *SPE-530, presented at the SPE Rocky Mountains Regional Meeting, Denver, Colorado, U.S.A., 27-28 May 1963.*, 27 May 1963
- **MCDUFF, D.R.** ; **SHUHART, C.E.** ; **JACKSON, S.K.** ; **POSTL, D.** ; **BROWN, J.S.** Understanding Wormholes in Carbonates: Unprecedented Experimental Scale and 3-D Visualization.. *SPE-134379-MS, presented at the SPE Annual Technical Conference and Exhibition, Florence, Italy, 19-22 September 2010.*, 19 September 2010
- **MCLEMORE, A.J.** ; **TYNER, J.S.** ; **YODER, D.C.** ; **BUCHANAN, J.R.** Discharge Coefficients for Orifices Cut into Round Pipes.. *J. Irrig. Drain Eng.*, 2013, vol. 139, 947-954
- **MITCHELL, D.** ; **DAVIS, J.** ; **APPLETON, J.** ; **WATSON, M.** First Successful Application of Horizontal Open Hole Multistage Completion Systems in Turkey's Selmo Field.. *SPE-170777-MS, presented at the SPE Annual Technical Conference and Exhibition, Amsterdam, The Netherlands, 27-29 October 2014.*, 27 October 2014
- **MOGENSEN, K.** ; **HANSEN, J.H.** A Dynamic Model for High-Rate Acid Stimulation of Very Long Horizontal Wells.. *SPE-110135-MS, presented at the SPE Annual Technical Conference and Exhibition, Anaheim, California, USA, 11-14 November 2007.*, 2007
- **NDONHONG, V.** ; **BELOSTRINO, E.** ; **ZHU, D.** ; **HILL, A.D.** ; **BECKHAM, R.E.** ; **SHUCHART, C.E.** The Impact of Rock Properties on Acid Jetting in Carbonate Rocks: An Experimental Study.. *SPE-180113, presented at 78th EAGE Conference and Exhibition, Vienna, Austria, 30 May - 2 June 2016.*, 30 May 2016

- **NDONHONG, V.** ; **ZHU, D.** ; **HILL, A.D.** Acid Jetting on Carbonate Rocks: A Computational Fluid Dynamics Study at Laboratory Scale.. *SPE-190849-MS, presented at 80th EAGE Conference and Exhibition, Copenhagen, Denmark, 11-14 June 2018.*, 11 June 2018

- **PUNNAPALA, S.** ; **RAHMAN, M.A.** ; **MISRA, S.** Challenge of Acidizing Horizontal Wells in Tight Carbonate Reservoirs - Weak Acid and Non-Acid Alternates.. *SPE-171766-MS, presented at the Abu Dhabi International Exhibition and Conference, Abu Dhabi, UAE, 10-13 November 2014.*, 10 November 2014

- **RODRIGUES, V.D.** ; **NEUMANN, L.F.** ; **TORRES, D.** ; **GUIMARÃES, C.** ; **TORRES, R.S.** Horizontal Well Completion and Stimulation Techniques - A review with Emphasis on Low-Permeability Carbonates.. *SPE-108075-MS, presented at the SPE Latin American and Caribbean Petroleum Engineering Conference, Buenos Aires, Argentina, 15-18 April 2007.*, 15 April 2007

- **SASONGKO, H.** ; **ZHU, S.** ; **HILL, A.D.** Acid Placement in Acid Jetting Treatments in Long Horizontal Wells.. *SPE-144200, presented at the SPE European Formation Damage Conference, Noordwijk, The Netherlands, 7-10 June 2011.*, 07 June 2011

- **SAU, R.** ; **GRUBERT, M.** Advanced Completion and Stimulation Design Model for Maximum Reservoir Contact Wells.. *SPE-171800-MS, presented at the Abu Dhabi International Exhibition and Conference, Abu Dhabi, UAE, 10-13 November 2014.*, 2014

- **SCHWALBERT, M.P.** ; **ZHU, D.** ; **HILL, A.D.** Skin Factor Equations for Anisotropic Wormhole Networks and Limited Entry Completions.. *SPE-189486-MS, presented at the International Conference and Exhibition on Formation Damage Control, Lafayette, Louisiana, USA, 7-9 February 2018.*, 07 February 2018

- **SHIRLEY, R.M.** ; **ZHU, D.** ; **HILL, A.D.** ; **DA MOTTA, E.P.** Maximizing the Value of Matrix Acidizing Treatments in Carbonate Reservoirs.. *SPE-185812-MS, presented at the 79th EAGE Conference and Exhibition, Paris, France, 12-15 June 2017.*, 12 June 2017

- **SHOKRY, A.F.** Acid Stimulation Results of Arab Carbonate Reservoirs in Offshore Field, UAE: 10 Years of Review, How to Prepare the Future Challenges Linked to Stimulation.. *SPE-138357-MS, presented at the Abu Dhabi International Exhibition and Conference, Abu Dhabi, UAE, 1-4 November 2010.*, 01 November 2010

- **SHUKLA, S.** ; **ZHU, D.** ; **HILL, A.D.** The Effect of Phase Saturation Conditions on Wormhole Propagation in Carbonate Acidizing. *SPE-82273-PA, SPE J.*, September 2006, 273-281

- **VAN DOMELEN, M.** ; **TALIB, N.** ; **GLASBERGEN, G.** Return to Basics and Proper Planning Opens the Possibility to Acid Stimulate a Difficult Chalk Formation.. *SPE-144159-MS, presented at the SPE European Formation Damage Conference, Noordwijk, The Netherlands, 7-10 June 2011.*, 07 June 2011

- **VAN DOMELEN, M.** ; **ABD HAMMOUD, M.** ; **GLASBERGEN, G.** ; **TALIB, N.** Optimization of Limited Entry Matrix Acid Stimulations with Laboratory Testing and Treatment Pressure Matching.. *SPE-157429-MS, presented at the SPE International Production and Operations Conference and Exhibition, Doha, Qatar, 14-16 May 2012.*, 14 May 2012

- **VIRK, P.S.** Drag Reduction in Rough Pipes.. *J. Fluid Mech.*, 1971, vol. 45, 225-246

- **VIRK, P.S.** Drag Reduction Fundamentals.. *AIChE J.*, 1975, vol. 21, 625-656